# EUROPEAN PATENT SPECIFICATION

(11) **EP 3 695 709 B1**
(45) Date of publication and mention of the grant of the patent: **14.05.2025**
(21) Application number: 19181652.9
(22) Date of filing: 21.06.2019
(51) Int. Cl.: A01G 31/06

(54) **APPARATUS FOR CULTIVATING PLANTS**
VORRICHTUNG ZUM ZÜCHTEN VON PFLANZEN
APPAREIL DE CULTURE DE PLANTES

(30) Priority: 18.02.2019 KR 20190018859
(43) Date of publication of application: 19.08.2020
(73) Proprietor: LG Electronics Inc., Seoul 07336 (KR)
(72) Inventor: JUNG, Yongki, Seoul 08592 (KR); LEE, Soobeom, Seoul 08592 (KR)
(74) Representative: Vossius & Partner Patentanwälte Rechtsanwälte mbB

(56) References cited:
- CN-A- 103 416 292
- CN-A- 103 733 971
- CN-U- 205 005 666
- DE-B3- 102016 222 326
- KR-A- 20130 089 393
- KR-B1- 100 674 737
- KR-Y1- 200 465 385
- US-A1- 2014 318 012

## Description

The present invention relates to an apparatus for cultivating plants.

In general, an apparatus for cultivating plants includes a predetermined cultivating chamber having an environment appropriate to grow the plants, and the plants are stored in the predetermined cultivating chamber. The apparatus for cultivating plants has components to supply nutrients and light energy required for plant growth, and the plants are grown by the supplied nutrients and light energy.

An apparatus for cultivating plants according to the related art is disclosed in Korean Patent Registration No. 10-1240375 B1. The related art discloses the structure in which a multi-stage tray is disposed inside a cabinet, light is irradiated from a light irradiation unit to the tray, a nutrient solution is supplied to the tray through a nutrient solution recovery container, and an inner part of the cabinet is maintained to a set temperature by an air conditioning and an air circulation fan.

However, according to the related art, the air conditioning to adjust the internal temperature of the cabinet is provided in the cabinet. Accordingly, noise may be increased when the air conditioning is used.

In addition, when both the air conditioning and the nutrient solution recovery container are provided inside the cabinet, the cultivating space may be reduced or the internal volume may be reduced due to the unnecessary space.

In addition, the air conditioning is exposed to the inner part of the cabinet, so the safety of the user is hindered and an outer appearance is not good.

In addition, the air conditioning is disposed at the inner lower portion of the cabinet, so the uniform cooling and heating throughout the entire portion of the cabinet may not be expected.

Meanwhile, US Patent Application No. 20180359946 discloses the structure in which a plurality of trays are provided inside a cabinet to cultivate plants, a light unit to irradiate light and a water supply unit are provided above the tray to supply a nutrient solution, and a cooling device and a heating device are provided by using a cooling cycle to adjust the internal temperature of the cabinet. In this case, the tank, the cooling device, and the heating device supplying the nutrient solution may have structures provided in the machine compartment separately provided at the lower portion of the cabinet.

However, in the above structure, the tank to supply the nutrient solution is provided inside the machine compartment. Accordingly, the storage state and the amount of the nutrient solution may be not identified.

In particular, when the nutrient solution is neglected for a long time, the nutrient solution may be deteriorated. Accordingly, stink or bacterial growth is expected, but it is difficult to manage the nutrient solution in the state that the nutrient solution is provided in the machine compartment.

In addition, even if nutrient replenishment is required, the machine compartment may be open and then a supplementary work may be performed. Accordingly, the convenience of use may be degraded.

In addition, the cooling device and the heating device for cooling and heating are disposed inside the machine compartment. Accordingly, the cooling and heating efficiency inside the cabinet may be degraded inside the cabinet. In addition, when the cabinet has a larger size, the temperature difference may be made inside the cultivating space.

CN 103 416 292 A discloses a vegetable planter having a nutrient solution storage tank disposed above a waste tank. CN 205 005 666 U discloses a vegetable growth chamber using a water tank.

The present invention is carried out according to the appended claims. The present invention provides an apparatus for cultivating plants, capable of minimizing the loss of a cultivating space inside a cabinet.

The present invention provides an apparatus for cultivating plants, in which a water supply assembly and a machine compartment are effectively arranged.

The present invention provides an apparatus for cultivating plants, capable of facilitating additional water supply and of improving the safety in use.

The present invention provides an apparatus for cultivating plants, capable of facilitating the access to the water tank and the management of the water tank.

The present invention provides an apparatus for cultivating plants, capable of ensuring the safety of a user and reducing noise.

The present invention provides an apparatus for cultivating plants, capable of improving the outer appearance of the internal space of the cabinet.

The present invention provides an apparatus for cultivating plants, capable of easily adjusting the internal temperature of a cabinet and making the while cultivating space having a uniform temperature distribution.

According to the present invention, the cultivating space and the machine compartment separated from the cultivating space are formed in the cabinet. The water tank to supply water to the bed in which the plants are grown, is provided inside the cultivating space separated from the machine compartment.

According to the present invention, a step part is formed on the bottom surface of the cultivating space, and the water tank to supply water to the bed is provided inside the space defined by the bottom surface of the cultivating space, the step part, and the door.

According to the present invention, the cultivating space having the bed and the machine compartment independent from the cultivating space are formed in the cabinet. The water supply assembly and the water tank are subsequently arranged in front of the machine compartment inside the cultivating space 11

The bed may cover the top surface of the machine compartment, the water supply assembly, and the water tank from above.

The water supply assembly may be disposed between the machine compartment and the water tank.

The water tank may be provided in front of the water supply assembly to cover the water supply assembly.

The water tank may be disposed in front of the machine compartment and may be exposed to the outside when the door is open.

The water tank may be formed such that the inner part of the water tank is viewed.

The water tank may be installed so as to be withdrawn or introduced inside the cultivation space.

The water tank may be detachably mounted from the cultivating space.

The machine compartment may be open to the rear portion.

The water tank may cover the cultivating space under the bed.

The front surface of the water tank may be positioned on the same plane of the front surface of the bed.

According to the disclosure in the present description, the machine compartment is formed under the cabinet, the water tank is provided in front of the machine compartment, an evaporator is provided on an inner side surface of a rear wall of the cultivating space, and a heater is provided on an outer side surface of the rear wall of the cultivating space, thereby adjusting the internal temperature of the space.

The evaporator may be disposed at an upper portion of the machine compartment.

The heater may be disposed at an area corresponding to the evaporator.

The evaporator may include a roll-bond type evaporator.

A plurality of beds are vertically disposed in the cultivating space and the inner part of the cultivating space may be divided into a plurality of parts.

The evaporators may be disposed to overlap with in a plurality of spaces disposed vertically.

A light assembly may be provided to irradiate light to the bed above the bed.

A blow assembly may be provided between the bed in front of the evaporator and the light assembly to circulate air in the cultivating space.

As described above, according to an embodiment of the present invention, the apparatus for cultivating plants has the following effects.

According to an embodiment, the cultivating space and the space for the machine compartment, in which the heater and the evaporator are disposed, are independently separated from each other. The water tank and the water supply assembly are configured to be provided inside the cultivating space in front of the machine compartment, thereby minimizing the loss of the cultivating space in which the bed is arranged.

In addition, the water tank and the water supply assembly are disposed in front of a step part protruding as the machine compartment is disposed, thereby effectively disposing the internal components in the cultivating space.

In particular, since the bed has a structure of covering the top surface of the machine compartment, the water supply assembly, and the water tank above, thereby maximizing the size of the bed, so even the bed may be efficiently disposed.

In addition, the water tank is provided in size filling the space in which the cultivating space, the machine compartment, the bed, and the door are provided, thereby ensuring a capacity to receive a sufficient amount of water. In addition, the loss of the cultivating space for plants may be minimized.

In addition, the water tank is disposed separately from the machine compartment including the compressor and the condenser to improve the safety of the user and to reduce noise during operation.

In addition, the water tank is disposed at a front portion of the cabinet such that the water tank is exposed when the door is open, thereby improving the convenience of the use.

In addition, the water tank may be introduced or withdrawn and detachable through the front portion, thereby more improving the convenience of the use and facilitating cleaning and management.

The water tank completely covers the rear space in the state that the water tank is mounted to cover the water supply assembly, thereby improving the outer appearance.

In addition, the water tank is positioned on the same plane as the front surface of the bed and fully filled in the lower space of the bed. Accordingly, the outer appearance of the lower portion of the cultivating space is more improved with the sense of unity.

In addition, the water tank is disposed in front of the machine compartment and the evaporator is disposed on the rear wall surface above the machine compartment, thereby easily adjusting the temperature of the cultivating space and preventing the loss of the cultivating space.

The evaporator includes a roll-bond type evaporator and is provided on an inner rear wall surface of the cultivating space, the heater is provided on the outer surface of the cultivating space to ensure the safety of the operation of the heater, and the loss of the cultivating space may be minimized.

The light assembly is provided above the bed, and the blower assembly is provided in front of the evaporator, between the bed and the light assembly, thereby minimizing the loss of the cultivating space and maintaining the uniform temperature throughout the whole cultivating space.

### BRIEF DESCRIPTION OF THE DRAWINGS

The present disclosure will become more fully understood from the detailed description given herein below and the accompanying drawings, which are given by illustration only, and thus are not limitative of the present disclosure, and wherein:
FIG. 1 is a perspective view illustrating an apparatus for cultivating plants according to an embodiment of the present invention.
FIG. 2 is a perspective view illustrating the apparatus for cultivating plants, the door of which is open.
FIG. 3 is an exploded perspective view of the apparatus for cultivating plants.
FIG. 4 is an exploded perspective view of the cabinet which is one component of the apparatus for cultivating plants.
FIG. 5 is a longitudinal sectional view of the cabinet.
FIG. 6 is an exploded perspective view of the water supply assembly which is one component of the apparatus for cultivating plants.
FIG. 7 is a cut-out perspective view of the apparatus for cultivating plants having the water tank serving as one component.
FIG. 8 is a perspective view of the water tank, the cover of which is open.
FIG. 9 is an exploded perspective view of the water tank.
FIG. 10 is a sectional surface taken along line A-A of FIG. 8.
FIG. 11 is a cut-out perspective view of a part taken along line 11-11' of FIG. 8.
FIG. 12 is a cut-out perspective view of a part taken along line 12-12' of FIG. 8.
FIG. 13 is a view illustrating the layout of water supply pipes inside the body.
FIG. 14 is a view illustrating that a bottom bed is mounted in FIG. 13.
FIG. 15 is a perspective view of the bed which is one component of the apparatus for cultivating plants.
FIG. 16 is an exploded perspective view of the bed when the bed is viewed from the top.
FIG. 17 is an exploded perspective view of the bed when the bed is viewed from the bottom.
FIG. 18 is a perspective view of the bottom bed.
FIG. 19 is an exploded perspective view of the seed package seated on the bed.
FIG. 20 is a plan view of a port which is one component of the seed package.
FIG. 21 is a cross sectional view illustrating that the seed package is seated on the bed.
FIG. 22 is a perspective view illustrating a bed bracket which is one component of the bed.
FIG. 23 is a bottom view of the bed when the bed is viewed from the bottom.
FIG. 24 is a perspective view of a part cut-out taken along line 24-24' of FIG. 23
FIG. 25 is a cut-out perspective view illustrating the bottom bed is withdrawn.
FIG. 26 is a perspective view of the introduction/withdrawal guide for introducing or withdrawing the bed.
FIG. 27 is a view illustrating that the bed is introduced.
FIG. 28 is a view illustrating that the bed is withdrawn.
FIG. 29 is a sectional view illustrating the state that the light assembly is mounted on the introduction/withdrawal guide.
FIG. 30 is a view illustrating a coupling structure of a light mounting member to mount the light assembly.
FIG. 31 is an exploded perspective view of the light assembly when viewed above;
FIG. 32 is an exploded perspective view of the light assembly when viewed below;
FIG. 33 is a view illustrating the state in which the display assembly, which is one component of the apparatus for cultivating plants, is mounted.
FIG. 34 is an exploded perspective view of the display assembly.
FIG. 35 is a view illustrating a state in which a blower assembly, which is one component of the apparatus for cultivating plants, is mounted.
FIG. 36 is an exploded perspective view of the light assembly when viewed from the front.
FIG. 37 is an exploded perspective view of the light assembly when viewed rear.
FIG. 38 is an exploded perspective view of the light assembly when viewed from the rear.

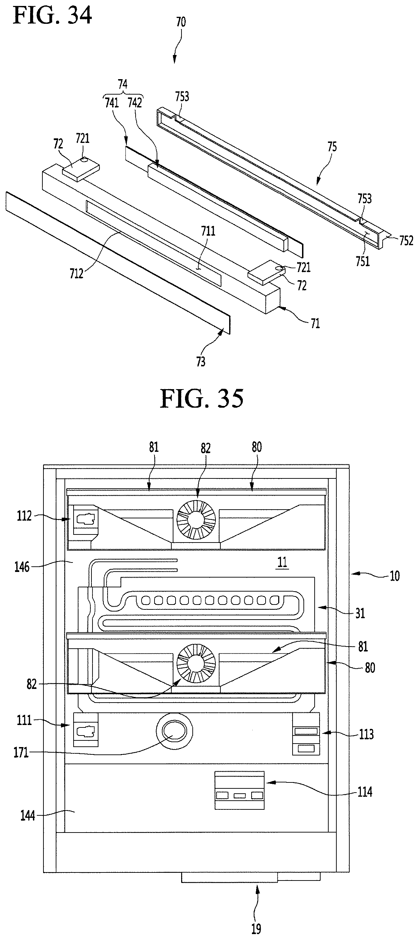

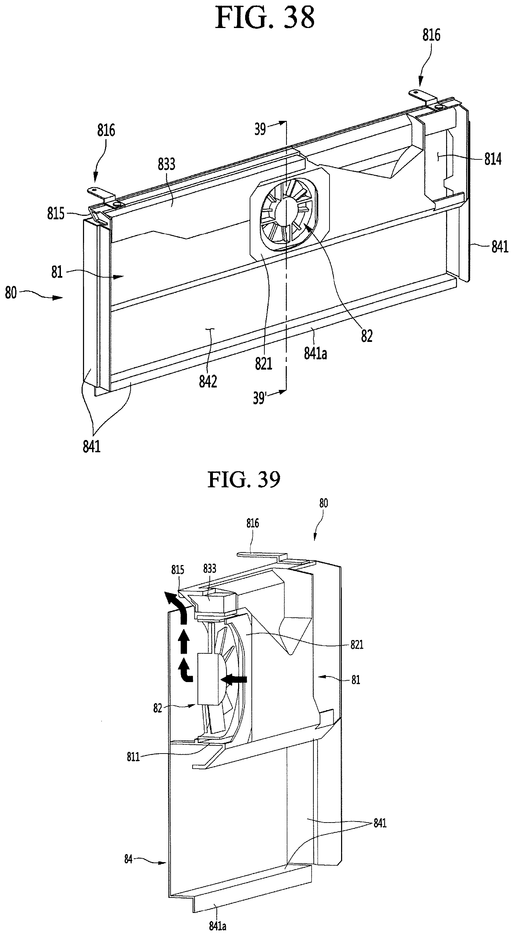

FIG. 35 is a cut-out perspective view of part taken along line 39-39' of FIG. 38.

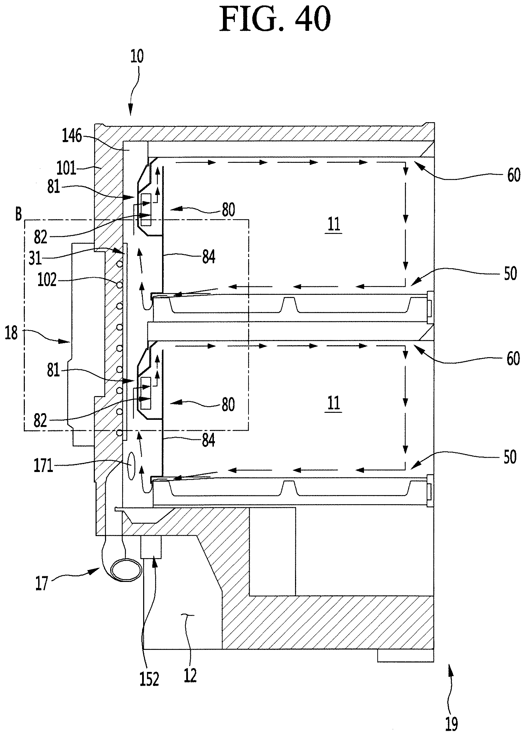

FIG. 40 is a sectional view illustrating an air circulation state in the cabinet.

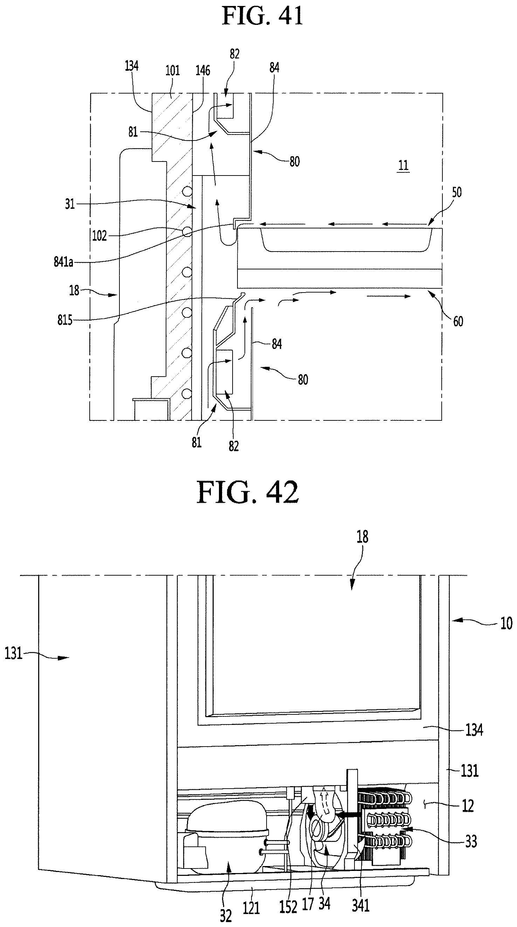

FIG. 41 is an enlarged view of part B in FIG. 40.
FIG. 42 is a perspective view of the open machine compartment of the apparatus for cultivating plants.

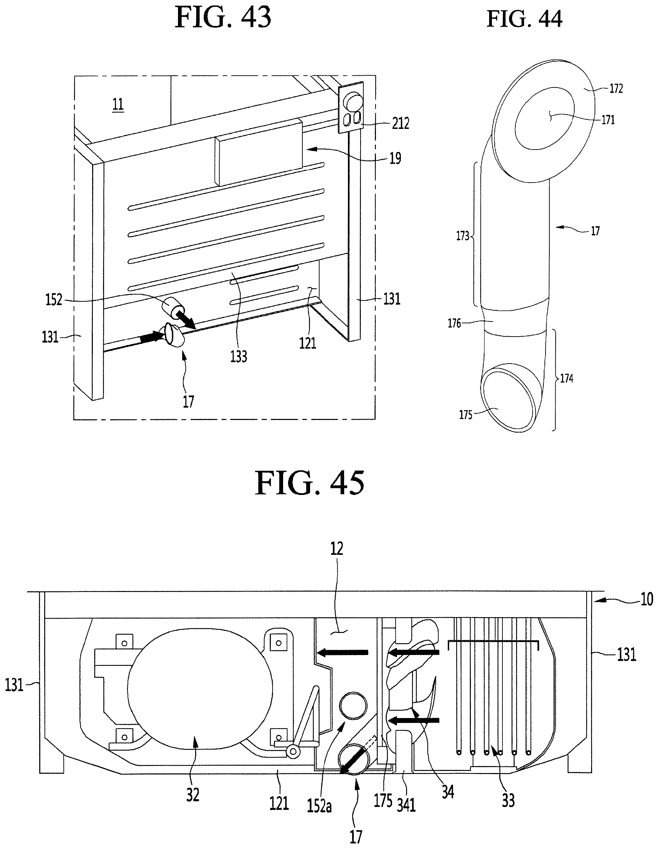

FIG. 43 is a partial perspective view of the cabinet when viewed from the bottom.
FIG. 44 is a perspective view of a supply duct which is a component of the apparatus for cultivating plants.
FIG. 45 is a plan view illustrating the arrangement of the supply duct and the return duct in the machine compartment.

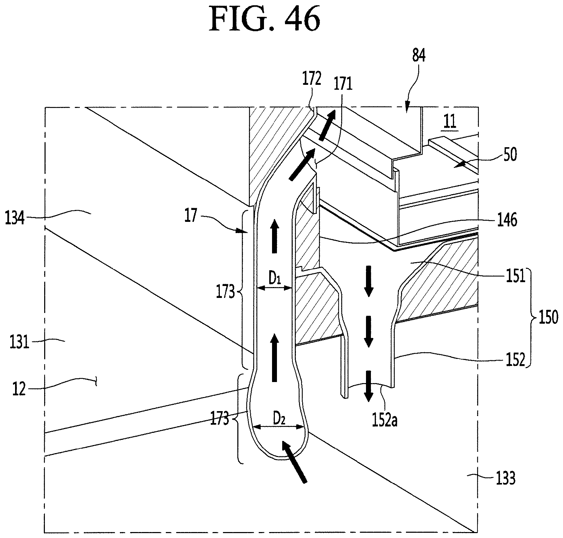

FIG. 46 is a view illustrating the supply and discharge states of CO2 through the supply duct and the return duct.

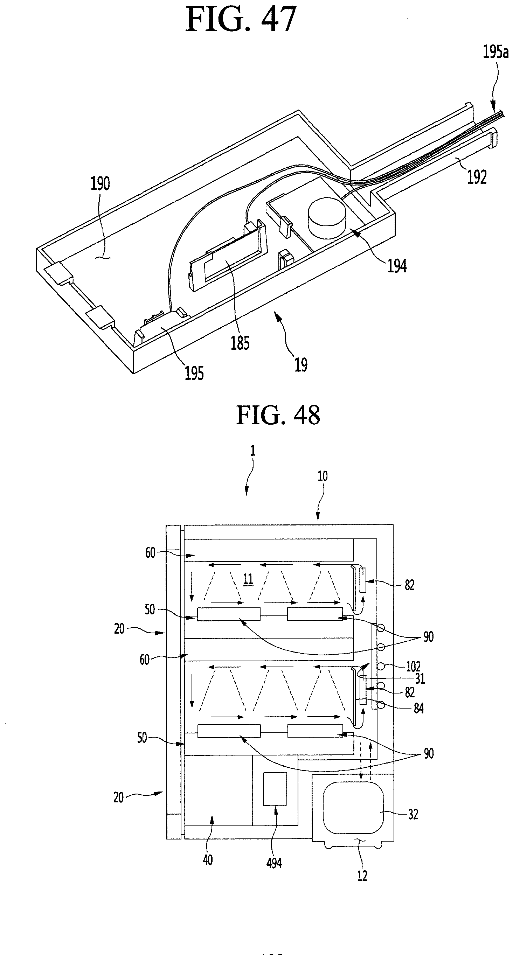

FIG. 47 is a perspective view illustrating the internal structure of the bottom case, which is one component of the apparatus for cultivating plants.
FIG. 48 is a block diagram illustrating the flow of a control signal of the apparatus for cultivating plants.

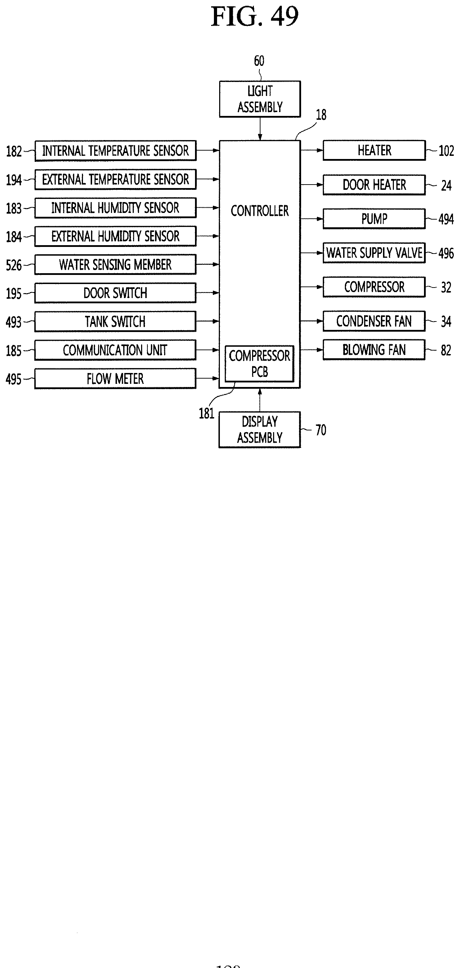

FIG. 49 is a view schematically illustrating an operating state of the apparatus for cultivating plants.

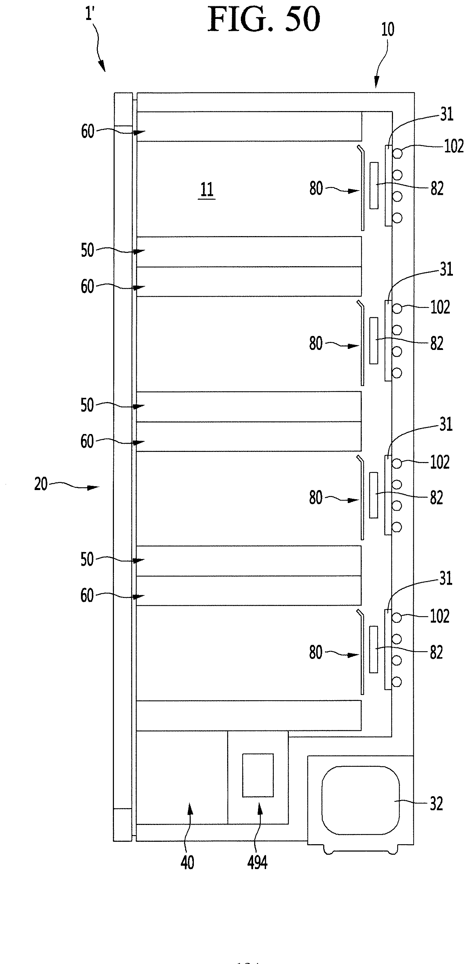

FIG. 50 is a view illustrating the internal structure of an apparatus for cultivating plants according to another embodiment of the present invention.

Hereinafter, the detailed embodiment of the present invention will be described in detail with reference to accompanying drawings. However, the present invention is not limited to embodiments suggesting the scope of the present invention. In addition, another invention, or another embodiment falling within the scope of the present invention may be easily suggested by adding, modifying, or deleting another component.

### [Whole Structure]

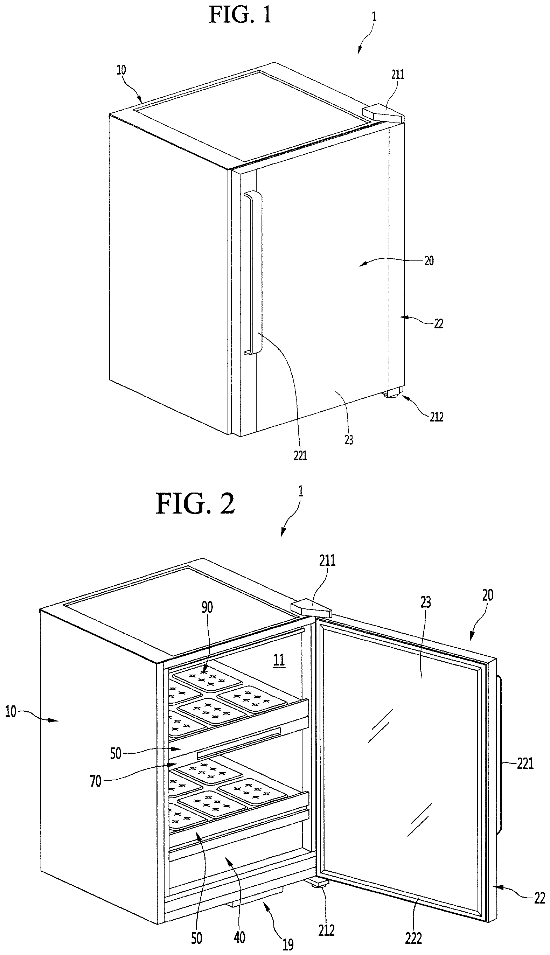

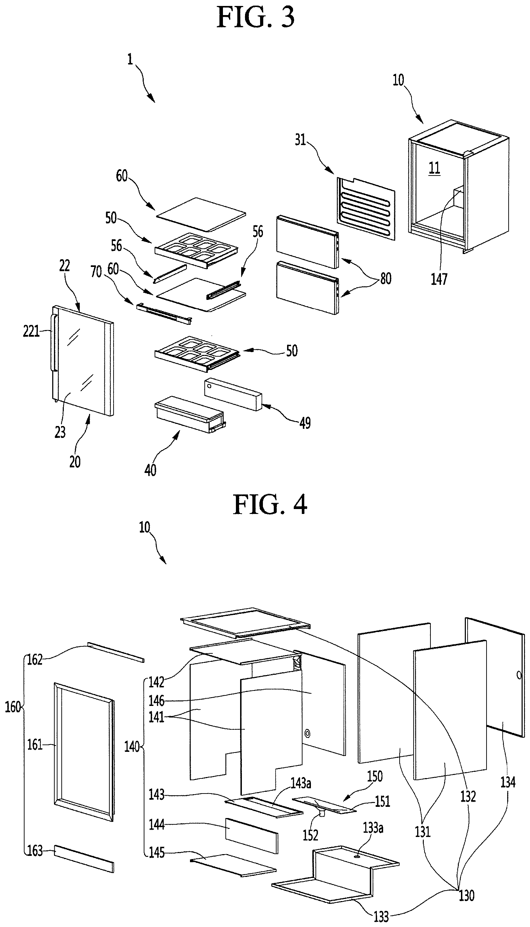

FIG. 1 is a perspective view illustrating an apparatus for cultivating plants according to an embodiment of the present invention. In addition, FIG. 2 is a perspective view illustrating the apparatus for cultivating plants, the door of which is open. In addition, FIG. 3 is an exploded perspective view of the apparatus for cultivating plants.

As illustrated in the drawings, the apparatus 1 for cultivating plants according to an embodiment of the present invention may have an outer appearance formed by a cabinet 10 having an internal space in which plants are cultivated and a door 20 to open/close the cabinet 10. In this case, the cultivated plants are plants, such as leaves or herbs that are usually used for wrapping or salad, that a user can eat and easily cultivate, and that do not occupy a wider space.

The cabinet 10 may be formed to have a front surface that is open and may be provided therein with a cultivating space 11. The cabinet 10 may be insulated. Accordingly, the cultivating space may maintain a set temperature.

A plurality of beds 50 are vertically arranged inside the cabinet 10. According to the present embodiment, two beds 50 are vertically provided and may be referred to as an upper bed 50 and a lower bed 50, respectively for the convenience of explanation. In addition, at least two beds 50 are further included depending on the size of the cabinet 10.

In addition, the bed 50 may have a structure in which a plurality of seed packages 90 having seeds of plants and necessary foods are seated. The bed 50 may be called a shelf or a tray. The seed package 90 may have the form of the suitable combination of various types of seeds and food appropriate to the seeds, and may selected as a product that a user want to cultivate. In addition, the bed 50 may have the structure of seating the seed package 90 and of maintaining the seating state.

In addition, the bed 50 may have a fluid passage allowing water supplied from a water tank 40 to flow. In addition, the bed may maintain a proper water level to always supply water to the seed package 90.

An introduction/withdrawal guide 56 may be provided at opposite side surfaces of the cabinet 10. Opposite ends of the bed 50 may be supported by the introduction/withdrawal guide 56 in the state that the bed 50 is seated on the introduction/withdrawal guide 56. The bed 50 may be introduced/withdrawn back and forth by the introduction/withdrawal guide 56. The bed 50 may be introduced or withdrawn inside the cultivating space 11. In the state that the bed 50 is withdrawn, the seed package 90 may be easily seated on the bed 50 and managed.

The cabinet 10 may have a cooling cycle including a compressor 32, a condenser 33, and an evaporator 31. The internal temperature of the cultivating space 11 may be adjusted through the cooling cycle. In this case, the evaporator 31 may be disposed on an inner rear wall surface of the cabinet, and remaining components such as the compressor 32 and the condenser 33 may be disposed in a machine compartment 12 provided at a rear lower portion of the cabinet 10. The machine compartment 12 may be separated from the cultivating space 11, thereby preventing noise from being introduced, maintaining the insulating of the cultivating space 11, and ensuring the safety of a user.

The evaporator 31 may include a roll-bond type evaporator, which is called a heat exchanger. The evaporator 31 may have a plate structure which is easily attached to the inner rear wall surface of the cabinet 10. In addition, the plate structure of the evaporator 31 may minimize the loss of the cultivating space 11. Meanwhile, the evaporator 31 may be close to the cultivating space 11 to effectively adjust the temperature of the cultivating space 11.

In addition, a blower assembly 80 is provided in front of the evaporator 31. Blower assemblies 80 vertically arranged have the same in structure and shape except for mounting positions thereof. The blower assemblies 80 may be provided in number corresponding to the number of beds 50 and may blow air forward from the rear portion of the beds 50. Accordingly, air circulation may be independently performed in each of internal spaces of the cultivating space 11 partitioned by the beds 50.

The internal air of the cultivating space 11 is circulated by the blower assembly 80 and the circulated air passes through the evaporator, so the cultivating space 11 may have a uniform temperature throughout the inner entire portion thereof, and the temperature may be rapidly adjusted. In addition, the air circulated by the blower assembly 80 may flow while passing through the top surface of the bed 50 and a bottom surface of the light assembly 60.

The air flowing by the blower assembly 80 may allow the plants grown from the bed 50 to more smoothly breathe and to be properly shaken by passing through the top surface of the bed 50, thereby adjusting the stress. Accordingly, the blower assembly 80 may provide air flow optimized to the growth of the plants. In addition, the air flowing by the blower assembly 80 may prevent the light assembly 60 from being overheated by passing through the bottom surface of the light assembly 60.

Meanwhile, the light assembly 60 may be provided above the bed 50. The light assembly 60 irradiates the bed 50 with light to provide light necessary for the plants. An amount of light irradiated from the light assembly 60 may be set to be similarly to the sunlight. In addition, the light assembly 60 may be set with an amount light and light irradiation time optimized to plants cultivated.

A water tank 40 may be provided on an inner bottom surface of the cabinet 10. The water tank 40 may store water to be supplied to the bed 50. The water tank 40 may be positioned under a bed 50 positioned at the lowest portion of a plurality of beds 50 and the front surface of the water tank 40 may be positioned at a position corresponding to the front end of the bed 50.

The widthwise length of the water tank 40 may correspond to the width of the inner space of the cabinet 10. The vertical-direction length of the water tank 40 may be formed to correspond to the distance between the bed 50 positioned at the lowest portion and the bottom surface of the cultivating space 11. In other words, the water tank 40 may be formed to occupy a space under the bed 50 positioned at the lowest portion and the space in front of the water tank 40 may be covered by the water tank 40.

A water supply case 49 may be provided in the space covered by the water tank 40. The water supply case 40 may be provided therein with a pump 494, a flow meter 495, and a water supply valve 496 to be described below. The water supply case 49, internal components of the water supply case 49, and pipes linked to the components will be referred to as a water supply unit or a water supply assembly.

The water tank 40 may be mounted inside the cabinet 10 to be introduced or withdrawn in a front-back direction and may have a separable structure. Accordingly, the water tank 40 may have a structure easy to supply water, be cleaned, and maintained.

Meanwhile, a display assembly 70 may be provided at an open first half part of the cabinet 10. The display assembly 70 may output the operating state of the apparatus 1 for cultivating plants to the outside. In addition, the display assembly 70 includes a handling unit to receive the handling by a user such that the whole operation of the apparatus 1 for cultivating plants may be set and input. For example, the display assembly 70 may include a touchscreen structure and may include a structure such as a button, or a switch.

The display assembly 70 may be positioned on the same front plane as the front end of the bed 50. The display assembly 70 may be positioned at a front end of the open front surface of the cabinet 10. The display assembly 70 may be disposed significantly closely to the rear surface of the door 20, when the door 20 is closed.

The door 20 may be formed in size to cover the open front surface of the cabinet 10. In addition, an upper hinge 211 and a lower hinge 212 may be shaft-coupled to an upper end and a lower end of one side of opposite left and right sides of the door 20. The door 20 may be rotatably coupled to the cabinet 10 by the upper hinge 211 and the lower hinge 212 and the cultivating space 11 may be open/closed due to the rotation of the door 20.

The door 20 may have a see-through structure in at least a portion thereof. Even when the door 20 is closed, the cultivating space 11 may be checked.

In detail, the door 20 may include a door frame 22 to constitute the circumference of the door 20 with an opening formed at the center thereof, and a door panel 23 to cover the opening of the door frame 22. The door panel 23 may be formed of glass or a transparent plastic material to have a structure in which the inner part of the apparatus 1 for cultivating plants is viewed. In addition, the door panel 23 is colored, color-coated, or deposited with metal, or has a film attached thereto such that the cultivating space 11 is selectively viewed or not viewed.

For example, when the light assembly 60 is turned on in the state that the door 20 is closed, the inner part of the cultivating space 11 is brightened such that the inner part of the cultivating space 11 is viewed through the door panel 23. To the contrast, when the light assembly 60 is turned off in the state that the door 20 is closed, the inner part of the cultivating space 11 is darkened such that the cultivating space 11 is not viewed due to the color or the optical characteristic of the door panel 23. Due to the above structure, the inner part of the cultivating space 11 is easily recognized even in the state that the door 20 is closed. Accordingly, the growing state of the plants may be checked. In addition, an interior effect may be exhibited. In addition, when it is unnecessary to recognize the inner part of the cultivating space 11, the neat outer appearance may be maintained.

In addition, when the light assembly 60 is turned on, the display assembly 70 may be visualized through the door panel 23. Accordingly, a user may recognize information through the display assembly 70 in the state that the door 20 is closed. In addition, even if the light assembly 60 is turned off, when the display assembly 70 is turned on to emit light, only the display assembly 70 may be visualized through the door 20.

Meanwhile, a plurality of door panels 23 may be disposed back and forth, and an insulating space may be formed between the plurality of door panels 23. In addition, if necessary, the door panel 23 may include insulation glass. Accordingly, the inner part of the cabinet 10 may be insulated from the outside.

The door frame 22 is provided at one side of the front surface thereof with a door handle 221 to rotate the door 20. In addition, the door frame 22 is provided on the circumference of the rear surface thereof with a gasket 222 to make air tightness between the cabinet 10 and the door 20. In addition, although not illustrated, the door 20 may have a door heater 24 to prevent dew from being condensed on the surface of the door 20.

Meanwhile, the bottom surface of the cabinet 10 may be slightly spaced apart from the ground surface on which the apparatus 1 for cultivating plants are installed. The cabinet 10 is provided on the bottom surface thereof with a bottom case 19. Electrical components, such as a door switch 195, an external temperature sensor 194, an external humidity sensor 184, and a communication unit 185 to be described below, which are disposed outside the cabinet 10, may be received in the bottom case 19. The bottom case 19 may be provided on the bottom surface of the cabinet 10 and may be configured not to be exposed to the outside when the door 20 is closed.

### [Structure of Cabinet]

Hereinafter, the structure of the cabinet 10 will be described in more detail with reference to accompanying drawings.

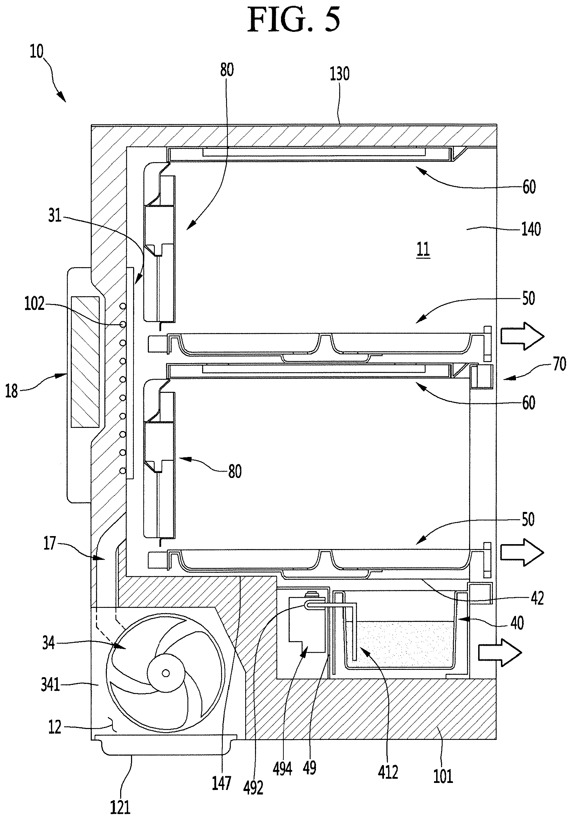

FIG. 4 is an exploded perspective view illustrating the cabinet which is one component of the apparatus for cultivating plants. In addition, FIG. 5 is a longitudinal sectional view of the cabinet.

As illustrated in drawings, the cabinet 10 may include an outer case 130 to form an outer appearance thereof and an inner case 140 to form the cultivating space 11. In addition, an insulating material 101 may be interposed between the outer case 130 and the inner case 140 to insulate the inner part of the cabinet 10 from the outside.

The outer case 130 may be formed of a metal material and may include at least one plate to form an outer surface of the cabinet 10. For example, the outer case 130 may include outer side plates 131 forming left and right side surfaces, an outer upper plate 132 forming a top surface, an outer rear plate 134 forming a rear surface, and an outer bottom plate 133 forming a bottom surface.

Meanwhile, the outer bottom plate 133 may be bent such that the machine compartment 12 is provided at a corner portion of a rear lower end of the cabinet 10. Accordingly, the machine compartment 12 including the compressor 32, the condenser 33, a condenser fan 34, or a fan guide 241 may be provided in a space separate from the cultivating space 11. In addition, the bottom surface of the machine compartment 12 may be formed by a machine compartment base 121. The rear surface of the machine compartment 12 may be covered by a machine compartment grill (not illustrated).

A controller 18 may be provided on the rear surface of the cabinet 10, that is, the rear surface of the outer rear plate 134. The controller 18 may be configured to control the overall operation of the apparatus 1 for cultivating plants. The controller 18 may include a compressor printed circuit board 181 additionally provided to control the compressor 32

The inner case 140 may include a metal material and may include a plurality of plates defining the inside of the cabinet 10, that is, the cultivating space 11. In this case, at least a portion of the inner case 140 may be formed a plastic material.

The inner case 140 may be formed of a metal material representing excellent thermal conductivity performance similarly to aluminum. The inner case 140 formed of the metal material may represent excellent heat transfer performance such that the inner part of the cultivating space 11 has a more uniform temperature distribution when the cultivating space 11 is heated or cooled. In addition, the inner case 140 may be configured to reflect light irradiated from the light assembly 60. The light irradiated from the light assembly 60 may be reflected from the surface of the inner case 140 of the metal material and uniformly irradiated to plants in the entire area of the bed 50, thereby resolving the problem of a shadow area to which the light is not irradiated. To this end, surface treatment, coating, or the attachment of a film may be more performed with respect to surfaces of the inner case 140 to improve the reflection performance.

For example, the inner case 140 may include inner side plates 141 forming opposite side surfaces, an inner upper plate 142 forming a top surface, an inner rear plate 146 forming a rear surface, and an outer bottom plate 143,144,145 forming a bottom surface.

The evaporator 31 may be disposed on a front surface of the inner rear plate 146 and a heater 102 may be disposed on a rear surface of the inner rear plate 146. Therefore, heating and cooling may be performed in the rear region of the cultivation space.

The evaporator 31 may be interposed between the inner rear plate 146 and the blower assembly 80 and may be cooled by through the refrigerant flowing by the driving of the compressor 32. The air cooled through the blower assembly (80) circulates in the cultivating space 11 to uniformly cool the cultivating space 11.

The heater 102 may be disposed on the rear surface of the inner rear plate 146 and may be filled with the insulating material 101. The heater 102 may be disposed in an area corresponding to the evaporator 31. A humid environment may be made inside the cultivating space 11 due to continuous moisture supply and the breathing of plants. Therefore, it is preferred that the heater 102 is disposed on the rear surface of the inner rear plate 146 not to be exposed to the inside of the cultivating space 11, for safety and durability.

The area of the inner rear plate 146 may be heated by the driving of the heater 102. The heated air may circulate inside the cultivating space 11 by the blower assembly 80 to uniformly heat the cultivating space 11. Since the heater 102 is positioned in an area corresponding to the evaporator 31, the heater 102 may operate when the evaporator 31 is frozen and used for defrosting the evaporator 31.

The inner part of the cultivating space 11 may be maintained at a temperature appropriated to growing plants (for example, 18 °C-28 °C) by the evaporator 31 and the heater 102. The internal temperature of the cultivating space 11 may be sensed by an internal temperature sensor 182 and may be uniformly maintained regardless of the external temperature of the cabinet 10.

The inner bottom plates 143, 144 and 145 may be formed in a shape corresponding to the shape in which the outer bottom plate 133 is bent, and may be formed with the first bottom plate 143, the second bottom plate 144, and the third bottom plate 145 coupled to each other.

The first bottom plate 143 may have a return duct hole 143a formed therein form mounting a return duct 150. The return duct 150 may have a structure of communicating with the machine compartment 12 to discharge the internal air of the cultivating space 11 to the machine compartment 12.

The return duct 150 may include a duct mounting part 151 mounted in the return duct hole 143a and a discharge pipe 152 extending from the center of the duct mounting part 151 into the machine compartment 12 through an opening 133a of the outer bottom plate 133.

The duct mounting part 151 may be formed to be inclined toward the discharge pipe 152. The duct mounting part 151 is disposed adjacent to a lower portion of the inner rear plate 146 and a lower portion of the evaporator 31 to discharge water to the machine compartment 12 when dew is condensed inside the cultivating space 11. In this case, the machine compartment 12 is provided therein with a dry fan to collect water discharged through the return duct 150.

The machine compartment 12 may communicate with the cultivating space 11 through a supply duct 17. Accordingly, carbon dioxide (CO₂) required for plant growth is supplied from the machine compartment 12 to the cultivating space 11. In addition, the internal air in the cultivating space 11 may be discharged through the return duct 150. At least one side of the supply duct 17 and the return duct 150 may have a structure capable of opening and closing, and may be opened when carbon dioxide (CO₂) is supplied.

A decoration member 160 may be provided on the front surface of the cabinet 10. The decoration member 160 connects a front end of the inner case 140 to a front end of the outer case 130 to form a front outer appearance of the cabinet 10. The decoration member 160 may include a frame decoration part 161 formed along the circumference of an open front surface of the cabinet 10 and an upper decoration part 162 and a lower decoration part 163 forming an upper end and a lower end of the front surface of the cabinet 10.

Regarding the arrangement in an inner lower space of the cabinet 10, as the machine compartment 12 is disposed, a step part 147 is formed to protrude inward from the bottom surface of the cultivating space 11. In other words, the step part 147 may protrude from the rear end portion of the bottom surface of the cultivating space 11. The step part 147 may be formed higher than the first half part of the cultivating space 11 as the machine compartment 12 is formed.

The rear portion of the bed 50 positioned at the lowest portion may have a structure of being seated on the top surface of the step part 147. The water tank 40 and the water supply case 49 may be arranged in the front-rear direction in a space between the bottom surface of the bed 50 and the front portion of the step part 147. In this case, the heights of the water tank 40 and the water supply case 49 may be configured to correspond to the height of the step part 147. Therefore, when the bed 50 is seated, a stable mounting structure may be provided such that the bed 50 is in a horizontal state without interfering with not only the step part 147, but the water tank 40 and the water supply case 49 in front of the step part 147.

The bed 50 may be seated on the step part 147 of the bottom surface of the cultivating space 11 and the water tank 40 and the water supply case 49 may be configured to be filled in the space provided between the bottom surface of the cultivating space 11 in front of the step part 147 and the bed 50. The height for disposing the beds 50 in multiple stages may be ensured through the above space structure, and the water tank 40 having a sufficient capacity and a water supply assembly may be effectively disposed without the loss of the space.

The lower structure of the cabinet 10 will be described again with reference to FIG. 5. The machine compartment 12 has a structure separated from the cultivating space 11 and the step part 147 is formed inside the cultivating space 11. The cabinet 10 has the lower structure in which the water tank 40 and the water supply case 49 are subsequently disposed in front of the step part 147. Accordingly, the machine compartment 12, the water tank 40, and the water supply assembly are disposed and fully filled in the space under the bed 50 positioned at the lowest portion, thereby preventing the loss of the cultivating space 11. In addition, the water tank 40 is disposed adjacent to the open front surface of the cabinet 10 to facilitate the access of the user.

The water tank 40 is disposed inside the cabinet 10 such that the water tank 40 is introduced or withdrawn while sliding for water supply and a service. In addition, since the water supply case 49 is maintained in a fixed state inside the cabinet 10, a connection pipe 492 provided in the water case 49 and a suction pipe 412 provided inside the water tank 40 is selectively connected to or disconnected from each other.

### [Water supply assembly]

Hereinafter, the structure of the water supply assembly will be described with reference to drawings.

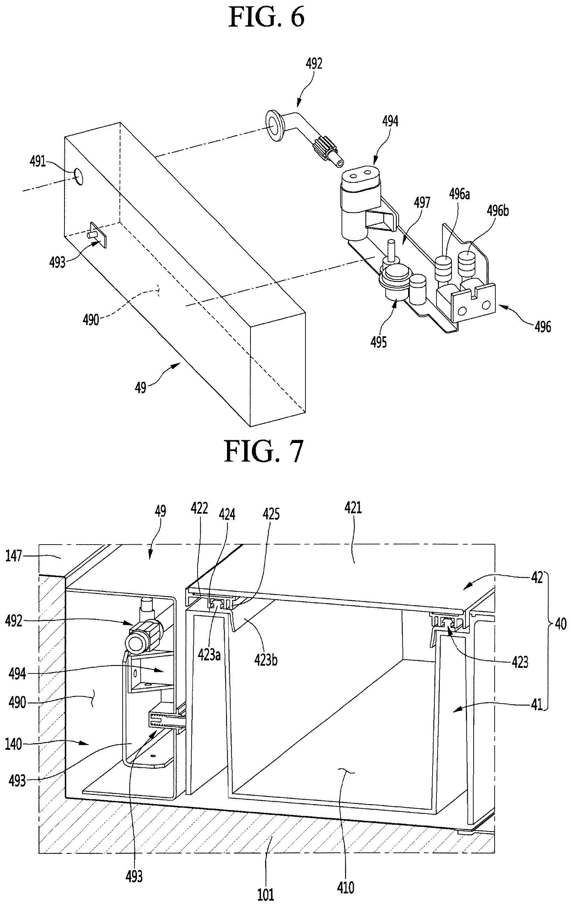

FIG. 6 is an exploded perspective view illustrating the water supply assembly which is one component of the apparatus for cultivating plants. In addition, FIG. 7 is a cut-out perspective view of the apparatus 1 for cultivating plants having the water tank serving as one component.

As illustrated in the drawings, the water supply case 49 may be formed in the shape of a box having an open rear surface. In addition, the inner space of the water supply case 49 may be provided to receive the connection pipe 492, the pump 494, the flow meter 495, and the water supply valve 496 therein.

The water supply case 49 may be formed higher than or slightly lower than the height of the step part 147 in the state that the water supply case 49 is mounted inside the cultivating space 11. In addition, the open rear surface of the water supply case 49 may be covered by the front surface of the step part 147.

The water supply case 49 may be formed in one side of the front surface thereof with a case hole 491 communicating with the connection pipe 492. The case hole 491 may be formed at a position corresponding to an inlet of the connection pipe 492. In addition, when the water tank 40 is mounted, the suction pipe 412 is connected with the connection pipe 492 through the case hole 491.

A tank switch 493 may be mounted on another side of the front surface of the water supply case 49. The tank switch 493 may protrude toward the water tank 40. As illustrated in FIG. 7, when the water tank 40 is mounted, the tank switch 493 may be configured to be pressed by the rear surface of the water tank 40.

Accordingly, the tank switch 493 may sense whether the water tank 40 is normally mounted to supply water and may transmit the sensing result to the controller. When the mounting signal of the water tank 40 is not input by the tank switch 493, the pump may not be operated. In addition, the information on the water tank 40, which is not mounted, is displayed on the display assembly 70 such that the user recognizes the information on the water tank 40.

A bracket 497 may be provided inside the water supply case 49. The bracket 497 may allow the mounting of the pump 494, the flow meter 495, and the water supply valve 496.

The connection pipe 492 is sequentially connected to the pump 494, the flow meter 495 and the water supply valve 496 through a pipe. The water in the water tank 40 may be supplied to the bed 50 through the flow meter 495 and the water supply valve 496, due to the operation of the pump 494.

The flow meter 495 senses the flow rate of water to be supplied, and prevents water from being excessively supplied to the bed 50 to overflow. A constant amount of water is supplied by the flow meter 495 to adjust an amount of water to be supplied to the bed 50. Accordingly, an optimized amount of water is supplied to the bed 50 according to the growing step of plants to prevent water from being excessively stored in the bed 50. Accordingly, the bed 50 may be always maintained to be cleaned and the humidity in the bed 50 and the cultivating space 11 may be properly maintained.

The water supply valve 496 is opened when the pump 494 is driven such that water may be supplied toward the bed 50. A plurality of water supply valves 496 may be provided depending on the number of beds 50, or water may be supplied to a plurality of beds 50 through the branch from one water supply valve 496.

According to the present embodiment, one water supply valve 496 may be branched into an upper fitting 496a and a lower fitting 496b, and an upper water supply pipe 498 and a lower water supply pipe 497 may be connected to the upper fitting 496a and the lower fitting 496b, respectively, to supply water independently to the beds 50 (upper bed 50 and lower bed 50) at the upper and lower positions. Accordingly, mutually different water supply environments may be provided to the beds 50 at the upper and lower positions, and an appropriate amount of water may be supplied to the beds 50, respectively.

The water tank 40 may be disposed in front of the water supply case 49, and the tank switch 493 is pressed in the state the water tank 40 is completely introduced. The top surface of the water tank 40 and the top surface of the water supply case 49 may have heights equal to or slightly lower than the top surface of the step part 147.

Accordingly, when viewed from the front, the lower area of the lower bed 50 may be completely covered by the water tank 40. In addition, the lower bed 50 and the top surface of the water tank 40 are provided to be significantly close to each other. Accordingly, the volume of the water tank 40 may be ensured and the water tank 40 and the lower bed 50 may produce a sense of unity

Particularly, since the front surface of the water tank 40 may be positioned on the same plane as the front surface of the lower bed 50, and may be vertically disposed adjacent to each other, the water tank 40 and the lower bed 50 may produce a sense of unity.

Hereinafter, the detailed structure of the water tank 40 will be described in more detail with reference to accompanying drawings.

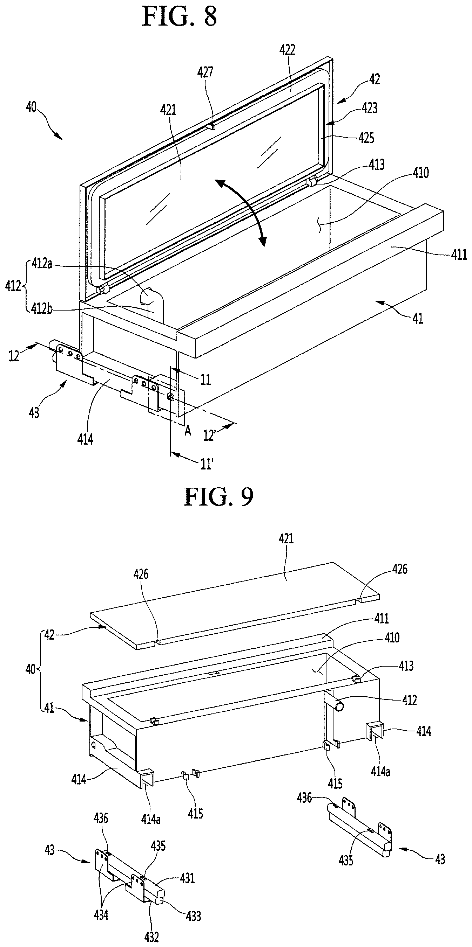

FIG. 8 is a perspective view of the water tank, the cover of which is open. In addition, FIG. 9 is an exploded perspective view of the water tank.

The water tank 40 may include a tank body 41 having a top surface open to receive water and a tank cover 42 to open and close the top surface of the tank body 41. The tank cover 42 is pivotably coupled to the tank body 41 and the tank body 41 may be open or closed by the pivoting of the tank cover 42. To this end, a cover engaging groove 426 and a cover engaging protrusion 413 may be formed at an upper end of the tank body 41 and one end of the tank cover 41.

At least a portion of the tank cover 42 is formed to be transparent such that the inner part of the tank cover 42 may be viewed even when the tank cover 42 is closed. The tank cover 42 may include a cover frame 422 having an opening at the center thereof and a cover plate 421 to cover the opening from the top surface of the cover frame 422. The cover plate 421 is formed to be transparent such that the water level inside the tank body 41 may be identified.

The cover engaging groove 426 may be formed in one end of the cover frame 422, and a restricting protrusion 427 may be further formed on an opposite side to the cover engaging groove 426 to maintain the tank cover 42 to be closed. When the tank cover 42 is closed, the restricting protrusion 427 may be inserted into a restricting groove (not shown), which is formed in the upper end of the tank body 41, to be restricted.

A gasket groove 424 formed of rubber or silicon may be formed along the circumference of the bottom surface of the cover frame 422. A cover gasket 423 may be mounted in the gasket groove 424. The cover gasket 423 contacts the upper end of the tank body 41 in the state that the tank cover 42 is closed so that the water tank 40 is airtight.

The cover gasket 423 is formed along the circumference of the cover frame 422. The cover gasket 423 may include a gasket mounting part 423a inserted and fixed in the gasket groove 424 and an airtightness part 423b extending downward from one side of the gasket mounting part 423a. The airtightness part 423b may be inserted into the open top surface of the tank body 41 and may closely contact the inner surface of the tank body 41 to completely seal the inner part of the tank body 41 with air tightness.

Further, a frame rib 425 may be further formed on a bottom surface of the cover frame 422 to press the airtightness part 423b. The frame rib 425 may extend downward from the bottom surface of the cover frame 422 corresponding to the airtightness part 423b and may contact the upper end of the airtightness part 423b. Accordingly, in the state that the tank cover 42 is closed, the frame rib 425 presses the airtightness part 423b to maintain the airtightness part 423b in close contact with the tank body 41.

Meanwhile, the suction pipe 412 is provided inside the tank body 41. The suction pipe 412 is provided at a position corresponding to the connection pipe 492 and extends to the inside of the tank body 41 by passing through the rear surface of the tank body 41.

In detail, the suction pipe 412 may include a horizontal part 412a and a vertical part 412b. One end of the horizontal part 412a may extend rearward through the rear surface of the tank body 41, that is, the surface facing the front surface of the water supply case 49. The horizontal part 412a may be formed in size to be press-fitted into the connection pipe 492.

The vertical part 412b is positioned inside the tank body 41 and may extend vertically downward from the end portion of the horizontal part 412a passing through the rear surface of the tank body 41. The vertical part 412b may extend to a position adjacent to the bottom surface of the tank body 41. Therefore, the water contained in the inside of the tank body 41 may flow into the connection pipe 492 through the vertical part 412b and the horizontal part 412a.

Meanwhile, a tank handle 411 may be provided to protrude forward from an upper end of the front surface of the tank body 41. The tank handle 411 extends from the left end portion of the tank body 41 to the right end portion of the tank body 41, and has a bottom surface open such that a user may insert the hand of the user into the bottom surface to pull out or push the water tank 40, thereby withdrawing or introducing the water tank 40. The front surface of the tank handle 411 may be positioned on the same plane as the front surface of the bed 50 and may be formed of a material the same as or similar to a material of the bed 50 such that the tank handle 411 and the bed 50 produce a sense of unity.

A tank fixing part 415 may be formed at the lower end of the rear surface of the tank body 41. A pair of tank fixing parts 415 may be provided on left and right sides, and the tank fixing part 415 may be configured to be coupled to protrusion provided on one side of the inner part of the cabinet 10 when the water tank 40 is completely introduced.

The tank fixing part 415 may include a pair of ribs rearward extending, the distance between the end portions of the ribs may be slightly narrower than the distance between the protrusions, and the distance between the intermediate portions of the ribs may have the size corresponding to the protrusion.

When the water tank 40 is completely introduced, the entrance of the tank fixing part 415 is elastically deformed while expanding. The protrusion may be press-fitted into the recessed intermediate portion of the tank fixing portion 415. When the water tank 40 is completely introduced as described above, the press-fitting of the protrusion into the tank fixing part 415 may be recognized through the sound or press-fitting feeling.

Therefore, the connection state of the suction pipe 412 and the connection pipe 492, which is not viewed when the water tank 40 is introduced as the water tank 40 is disposed at a rear portion, may be recognized through the coupling of the tank fixing part 415. In addition, the water tank 40 may be maintained in an exact and firm introduction state by the tank fixing part 415.

Rail mounting parts 414 may be formed at lower end portions of the left and right side surfaces of the tank body 41. The rail mounting part 414 extends from the front end portion to the rear end portion of the tank body 41 and provides a space 414a for mounting a tank rail 43 to withdraw or introduce the water tank 40.

The rail mounting part 414 may be open downward. Accordingly, the tank body 41 has a structure of being seated from an upper portion to a lower portion of the tank rails 43 disposed at opposite sides of the tank body 41 and is coupled to the tank rails 43.

The tank rail 43, which has a rail structure for multi-stage withdrawal and introduction, may have a compact structure. In detail, the tank rail 43 may include an upper rail 431, a lower rail 432, and a middle rail 433 connecting the upper rail 431 and the lower rail 432. The upper rail 431 may be inserted into the rail mounting part 414 and fixed to the rail mounting part 414. Rail brackets 434, which are provided at the lower rail 432, may be fixedly mounted on opposite sidewalls of the cultivating space 11. The middle rail 433 is slidably coupled to the upper rail 431 and the lower rail 432 to connect the upper rail 431 to the lower rail 432. Accordingly, when a user holds the tank handle 411 and pull forward or push the water tank 40, the tank rail 43 slides to withdraw or introduce the water tank 40.

Meanwhile, the tank body 41 is configured to be easily mounted and separated from the tank rail 43 without assembling or disassembling additional tools or coupling members for cleaning or managing the tank body 41.

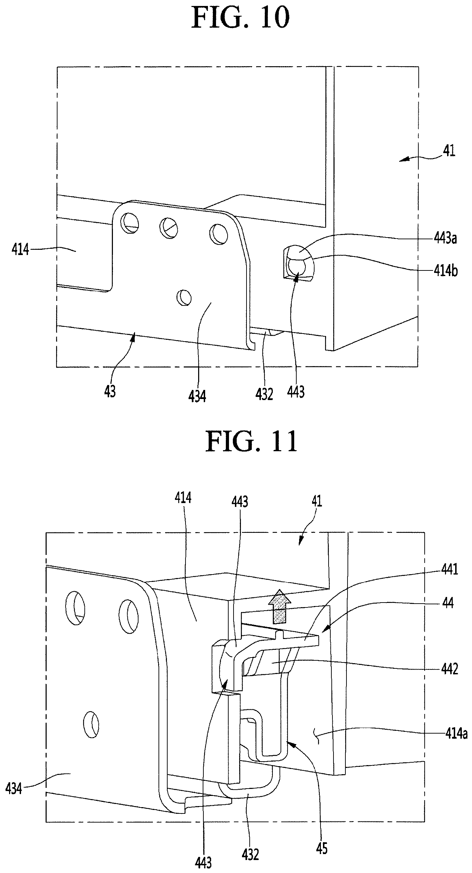

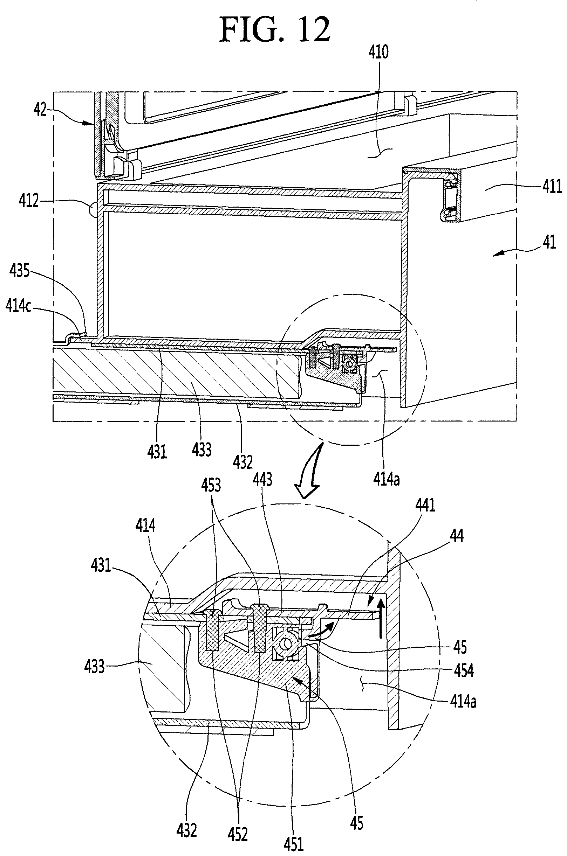

FIG. 10 is an enlarged view of part A of FIG. 8. In addition, FIG. 11 is a cut-out perspective view of a part taken along line 11-11' of FIG. 8. In addition, FIG. 12 is a cut-out perspective view of a part taken along line 12-12' of FIG. 8.

As illustrated in drawings, the tank rail 43 may be inserted into the rail mounting part 414. The rear end portion of the rail mounting part 414 is inserted into a rail restricting portion 435 protruding from the top surface of the upper rail 431 such that the rear end portion of the tank body 41 may be fixed to the tank rail 43 .

The rail restricting portion 435 may be formed by cutting out a portion of the upper rail 431. In addition, when the rear end portion of the rail mounting part 414 is moved back and inserted as upper and front portions are bent, the second half part of the tank rail 43 and the rail mounting part 414 may be restricted with respect to each other.

Meanwhile, the tank rail 43 may be provided at the front end portion thereof with a rail locker 44 to restrict the front end portion of the tank rail 43 in the rail mounting part 414 and a locker fixing member 45 to mount the rail locker 44. The rail locker 44 is configured to be coupled to the tank rail 43 and selectively coupled to or decoupled from the tank body 41 through the handling of the user. Accordingly, the user may couple or decouple the tank body 41 to or from the tank rail 43 through the handling of the rail locker 44.

In more detail, the lock fixing member 45 may inserted and mounted into the open front end portion of the upper rail 431. In addition a screw 453 passing through a screw hole 436 formed in the top surface of the upper rail 431 is coupled to the locker fixing member 45 such that the locking fixing member 45 is fixed into the upper rail 431.

The locker fixing member 45 may have a plurality of coupling grooves 452 for coupling the screw 453. A pair of screws 453 may not only couple the locker fixing member 45, but couple the rail locker 44 to the top surface of the upper rail 431.

In detail, as illustrated in FIG. 12, the screw 453 at the rear portion passes through the screw hole 436 at the rear portion to be coupled to the coupling groove 452 formed in the rear portion of the locker fixing member 45, thereby coupling the upper rail 431 with the locker fixing member 45. In addition, the screw 453 at the front portion passes through the rail locker 44 and the screw hole 436 at the front portion of the upper rail 431 and then is coupled to the coupling groove 452 formed in the front portion of the locker fixing member 45, thereby maintaining the coupling state among the rail rocker 44, the upper rail 431, and the locker fixing member 45.

The rail locker 44, which extends forward from the top surface of the upper rail 431, may extend forward beyond the front end portion of the upper rail 431. In addition, a locker restricting part 442 may protrude from the bottom surface of the rail locker 44 at the front portion of the upper rail 431. The locker restricting part 442 may extend downward and protrude toward the front surface of the locker fixing member 45.

The front end portion of the locker fixing member 45 may be exposed through the open front surface of the upper rail 431. In addition, a locker restricting groove 454 may be formed in the front surface of the locker fixing member 45, and the locker restricting part 442 may be selectively inserted into the locker restricting groove 454 to fix the rail locker 44.

A locker restricting protrusion 443 may be formed to protrude in a side direction from a side portion of the locker restricting part 442. In addition, the locker restricting protrusion 443 may be inserted into a mounting part opening 414b open in a side surface of the rail mounting part 414. In other words, in the state that the locker restricting protrusion 443 is inserted into the mounting part opening 414b, a front end portion of the tank rail 43, that is, the front end portion of the upper rail 431 may be fixed to the inside of the rail mounting part 414. As described above, the rear end portion and the front end portion of the tank rail 43 may be restricted by the rail mounting part 414 and fixed. In particular, in the state that the locker restricting protrusion 443 is inserted into the mounting part opening 414b, the locker restricting part 442 is locked and restricted by the locker restricting groove 454, so the tank rail 43 is prevented from being easily separated from the rail mounting part 414.

Meanwhile, the rail locker 44 may be formed of a plastic material, and may be formed with predetermined elasticity. In addition, the locker restricting protrusion 443 may be formed at an upper portion thereof with an inclined surface 443a. Accordingly, when the user lifts the rail locker 44, the locker restricting protrusion 443 may be out of the mounting part opening 414b by the inclined surface 443a, and the tank rail 43 may be separated from the rail mounting part 414. In such a state, when the tank body 41 is drawn forward, the rear portion of the tank rail 43 may be separated from the tank body 41.

As described above, as the water tank 40 is separated from the tank rail 43, cleaning and service are possible and management is more easily performed. In addition, the tank rail 43 may be coupled to the rail mounting part 414 again, and the water tank 40 may be introduced or withdrawn in the state that the tank rail 43 is coupled to the rail mounting part 414.

Meanwhile, the water in the water tank 40 may be supplied to the bed 50 through the pump 494 and the water supply valve 496.

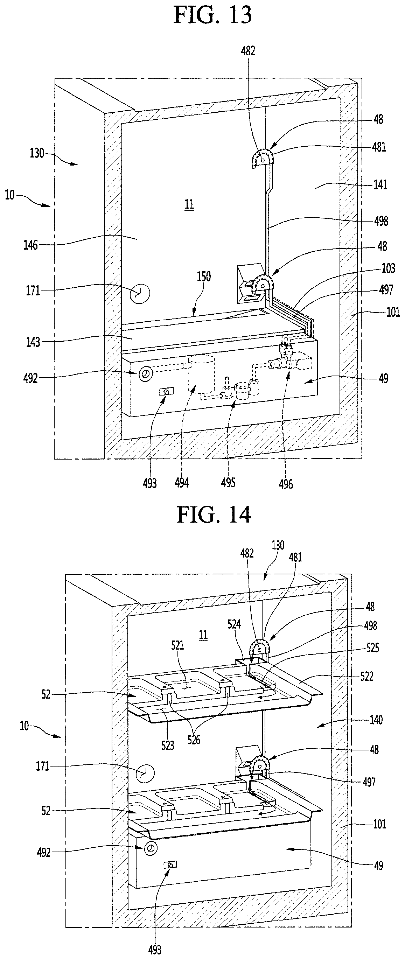

FIG. 13 is a view illustrating the layout of water supply pipes inside the body. In addition, FIG. 14 is a view illustrating that a bottom bed is mounted in FIG. 13.

As illustrated in FIG. 14, the upper water supply pipe 498 and the lower water supply pipe 497 may be connected to the water supply valve 496 to supply water to the upper bed 50 and the lower bed 50, respectively. The upper water supply pipe 498 and the lower water supply pipe 497 may be provided independently from each other and may extend toward the rear end portion of the bed 50, thereby supplying water necessary the growth of plants.

In detail, end portions of the upper water supply pipe 498 and the lower water supply pipe 497 may be connected to the water supply valve 496 provided in the water supply case 49. The water supply valve 496 may include the upper fitting 496a and the lower fitting 496b independently configured. The upper water supply pipe 498 may be connected to the upper fitting 496a, and the lower water supply pipe 497 may be connected to the lower fitting 496b.

To ensure the space of the water tank 10 and facilitate the fluid passage arrangement, the connection pipe 492, the pump 494, the flow meter 495, and the water supply valve 496 may be subsequently arranged in a widthwise direction. The water supply valve 496 may be positioned at the outermost portion of the water supply case 49, and the upper water supply pipe 498 and the lower water supply pipe 497 may be arranged to pass through the sidewall surfaces of the water supply case 49.

Meanwhile, a water supply pipe guiding part 103 may be formed on an inner sidewall surface of the cabinet 10 adjacent to the water supply valve 496. The water supply pipe guiding part 103 may be formed as one sidewall of opposite left and right sidewalls of the storage space, that is, the inner side plate 141 is recessed or open.

The water supply pipe guiding part 103 may extend upward from one side adjacent to the water supply valve 496 and then may extend rearward along the upper end portion of the step part 147. Accordingly, the upper water supply pipe 498 and the lower water supply pipe 497 connected to the water supply valve 496 may be guided to the rear wall surface of the cultivating space 11, that is, the position of the inner rear plate 146 along the sidewall of the cultivating space 11.

In order to mount the lower bed 50, the guides 56 for introducing or withdrawing, which are mounted on opposite side surfaces of the cultivating space 11, may be configured to cover a section, which is the water supply pipe guiding part 103, extending in the front-rear direction. Therefore, in the state that the lower bed 50 is mounted, the water supply pipe guiding part 103 is not exposed to the outside, thereby making a more neat outer appearance.

The upper water supply pipe 498 and the lower water supply pipe 497 are positioned in the corner areas of the rear and side surfaces of the cultivating space 11. That is, the upper water supply pipe 498 and the lower water supply pipe 497 may be bent upward in a corner area that the inner rear plate 146 and the inner side plate 141 are adjacent to each other and may extend. The upper water supply pipe 498 is configured to extend to a water supply part 524 of the upper bed 50 and the lower water supply pipe 497 is configured to extend to a water supply part 524 of the lower bed 50, thereby supplying water to the upper bed 50 and the lower bed 50.

The water supply pipes 497 and 498 are guided along the inner part of the cultivating space 11 and easily placed. The water supply pipes 497 and 498 extend upward along the edge area of the cultivating space 11 to minimize interference between internal components.

In particular, since the water supply pipes 497 and 498 are disposed at a position apart from the side of the evaporator not to interfere with the evaporator 31 mounted on the front surface of the inner rear plate 146, water flowing along the water supply pipes 497 and 498 is prevented from being frozen or excessively lowered at the temperature due to the cooled air of the evaporator. In addition, the water supply pipes 497 and 498 may have structures of being prevented from interfering with the internal component of the cabinet 10, such as the evaporator 31, and of facilitating the placement work.

The water supply pipes 497 and 498 may be formed of a metal pipe such as stainless steel. Therefore, the water supply pipe 497 and 498 may be sanitarily managed and may be maintained firmly in shape, thereby preventing the fluid passage from being deformed or bent to being clogged. Accordingly, the reliable water supply is possible.

The water supply pipes 497 and 498 extend upward through the water supply part 524 and then are bent toward the water supply part 524. The outlets of the water supply pipes 497 and 498 may be formed to be directed toward the inside of the water supply part 524 from an upper portion adjacent to the water supply part 524.

Meanwhile, a water supply pipe holder 48 may be provided at a position corresponding to the water supply part 524. The water supply pipe holder 48 may be formed of a plastic or rubber material, and may be fixedly mounted on the inner rear plate 146. Water supply pipe holders 48 may fix the water supply pipes 497 and 498 such that the outlets of the water supply pipes 497 and 498 are always directed toward the inside of the water supply part 524 at a set height thereof.

In detail, the water supply pipe holder 48 may be formed in a semicircular shape, and may include a round part 481 allowing the water supply pipes 497 and 498 to pass therethrough along the rounded circumference of the water supply pipe holder 48. The round part 481 may be formed to correspond to the bending shape of the water supply pipes 497 and 498, and the rear surface of the round part 481 may be formed in an open or recessed shape to receive the bent portions of the water supply pipes 497 and 498. The outlets of the water supply pipes 497 and 498 may extend further downward through the round part 481 to be closer to the water supply part 524.

A holder fixing hole 482 may be formed at the center of the water supply pipe holder 48 to fix the screw. The screw passes through the holder fixing hole 482 and is fastened to the inner rear plate 146 such that the water supply pipe holder 48 may be maintained in a fixed state at a preset position.

The water supply pipes 497 and 498 and the water supply pipe holder 48 may be covered when the blower assembly 80 is mounted on the inner rear plate 146, and may not be exposed to the outside when the apparatus 1 for cultivating plants is generally used.

The upper bed 50 and the lower bed 50 have the same water supplying structure except for the vertical positions thereof. The water supplied to the water supply part 524 may be stored in the water collecting part 523 inside the bed 50 to provide moisture to the seed package 90 mounted on the bed 50.

### [Bed structure]

Hereinafter, the structure of the cabinet 50 will be described in more detail with reference to accompanying drawings. Although a plurality of beds 50 are provided, the beds 50 have the same structure except for the mounting positions thereof. Accordingly, the following description will be made with respect to only one bed 50.

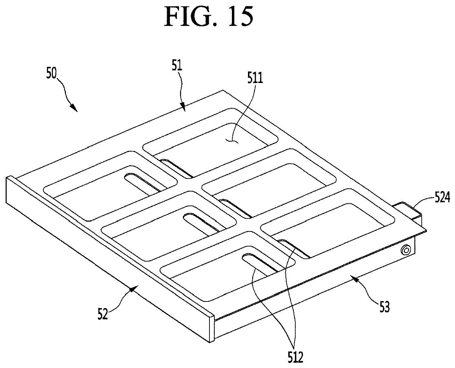

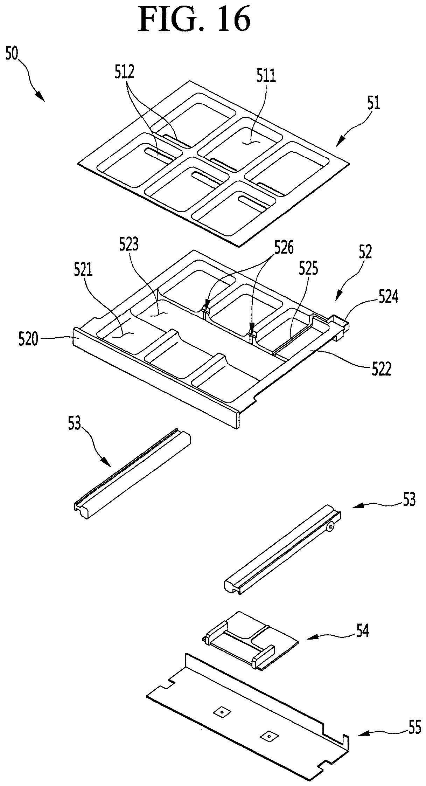

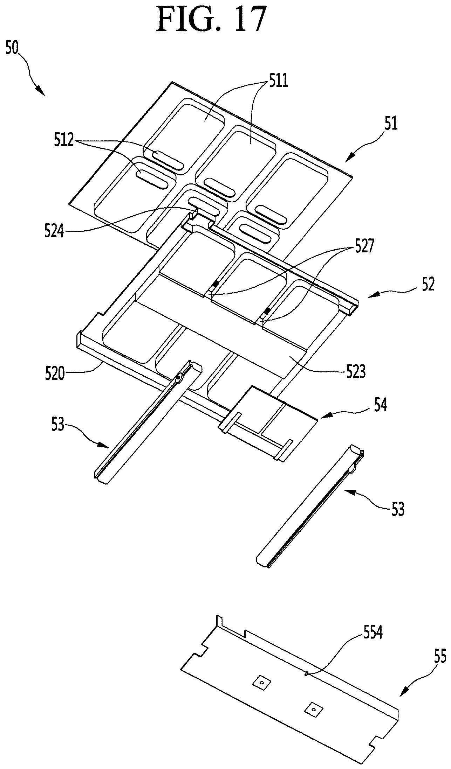

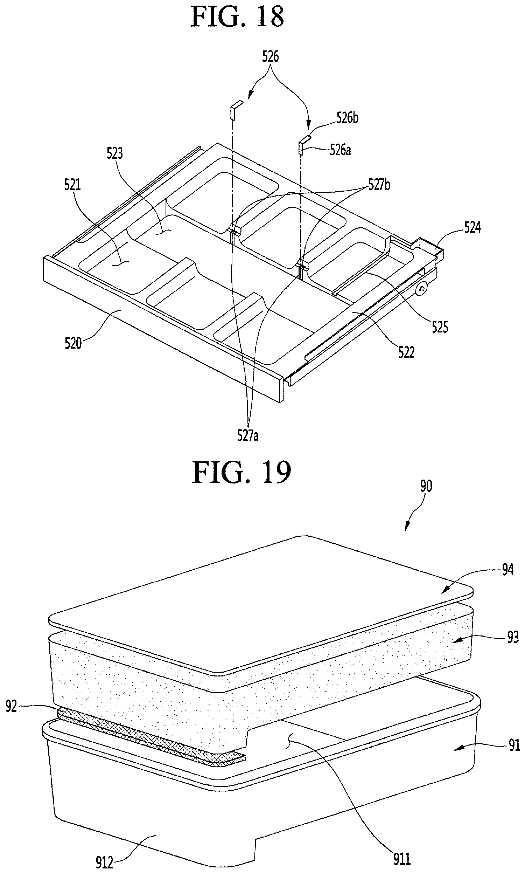

FIG. 15 is a perspective view illustrating the bed which is one component of the apparatus for cultivating plants. In addition, FIG. 16 is an exploded perspective view of the bed when the bed is viewed from the top. In addition, FIG. 17 is an exploded perspective view of the bed when the bed is viewed from the bottom. In addition, FIG. 18 is a perspective view of the bottom bed.

As illustrated in drawings, the bed 50 may be formed in a rectangular plate shape dividing the cabinet 10, and may be seated on the guides 56 for withdrawal and introduction, which are mounted on opposite side surfaces of the cabinet 10, such that the beds 50 are withdrawn or introduced.

The bed 50 may include a bottom bed 52 to form a lower structure for totally supplying water. The bottom bed 52 may form the whole shape of the bed 50 and may be formed of a plastic material.

The bottom bed 52 may include bed flanges 522 extending in a side portion from opposite side end portions of the bottom bed 52. A bed side 53 may be coupled to the bottom surface of the bed flange 522.

The bottom bed 52 may include a recess part 521, and an upper bed 51 may be seated in the recess part 521. The recess part 521 may be provided in the shape corresponding to the shape of the upper bed 51. In other words, the recess part 521 may be formed at a position corresponding to a package seating part 511 formed in the upper bed 51, and may be recessed in the shape corresponding to the package seating part 511 such that the package seating part 511 is stacked up the recess part 521.

In addition, the bottom bed 52 may include the water supply part 524 and the water collecting part 523 to store water supplied through the water supply part 524. The water stored in the water collecting part 523 may be constantly supplied to the seed package 90.

In detail, the water collecting part 523, which is positioned at the center of the bottom bed 52, may extend from a left side end portion of the bottom bed 52 to a right side end portion of the bottom bed 52. In addition, the water collecting part 523 may be recessed to a position lower than the recess part 521 such that water is stored only in the water collecting part 523. The water collecting part 523 may be formed to have a predetermined width in a front-rear direction such that all seating part openings 512 formed in the upper bed 51 are received in the water collecting part 523.

In addition, the water supply part 524 may be formed at the corner of the rear end portion of the bottom bed 52. The water supply part 524 has a shape of protruding slightly rearward from the bottom bed 52, has an open top surface, and is recessed. Accordingly, the water supply part 524 may receive water from the water supply pipes 497 and 498 positioned above. In addition, the water supply part 524 is positioned higher than the water collecting part 523 such that the water naturally flows from the water supply part 524 to the water collecting part 523.

A water guide part 525 may be recessed and formed between the water supply part 524 and the water collecting part 523. The water supply part 524 may be connected with the water collecting part 523 by the water guide part 525. The water supplied to the water supply part 524 flows to the water collecting part 523 along the water guide part 525. The water guide part 525 may be formed to have a slop lowered toward the water collecting part 523 from the water supply part 524. Accordingly, when water is supplied to the water supply part 524, the water may be naturally supplied to the water collecting part 523 along the water guide part 525.

The water collecting part 523 may include a water sensing member 526 to sense the water level. Accordingly, when it is necessary to supply water to the plants being cultivated, the water level of the water collecting part 523 or the existence of moisture is identified through the water sensing member 526 and then whether the water is supplied from the water tank 40 to the bed 50 is determined.

A pair of water sensing members 526 may be provided and may be spaced apart from each other. The water sensing members 526 may be disposed at opposite sides of the water collecting part 523 to facilitate the sensing of moisture and to facilitate the placement of a wire 544 for supplying power of the water sensing member 526.

Sensing member mounting parts 527 may be formed to be recessed to mount the water sensing members 526 at front end portions of left and right sides of the recess part 521 formed at the center of the bottom bed 52. The sensing member mounting parts 527 may be recessed in the same shape as that of the water sensing member 526 and may longitudinally extend in the vertical direction. In addition, the sensing member mounting part 527 may be formed in the upper end thereof with a slot 527a through which the water sensing member 526 passes.

The water sensing member 526 may be formed of a metal material having conductivity and may be formed in a bent plate shape such that the water sensing member 526 is mounted in the sensing member mounting part 527 through the slot 527a. A vertically extending part 526a, which extends in the vertical direction, in the water sensing member 526 may have a lower end extending to the bottom surface of the water collecting part 523. In addition, the water sensing member 526 may be configured such that a rear end portion of a horizontally extending part 526b horizontally extending to the bottom bed 52 is exposed to the bottom surface of the bottom bed 52 through the slot 527a. In addition, the horizontally extending part 526b exposed to the bottom surface of the bottom bed 52 may be fixed and mounted to the bottom bed 52 through the screw.

In addition, the power may be supplied to a pair of water sensing members 526. When water is present in the water collecting part 523, electricity may be conducted between the pair of water sensing members 526. In addition, when water is absent in the water collecting part 523, electricity is not conducted between the pair of water sensing members 526. In this case, the pump 494 is driven to supply water to the water collecting part 523. In other words, the pair of water sensing members 526 serve as electrodes inside the water collecting part 523, and whether to supply water from the water tank 10 is determined depending on the conduction of electricity between the pair of water sensing members 526.

The guides 56, which are seated on left and right sides of the bottom bed 52, may include bed sides 53 to guide the withdrawal and the introduction of the bed 50. The bed sides 53 may have a structure of being coupled to opposite end portions of the bottom bed 52 after separately being molded. In this case, the bed sides 53 may be formed integrally with the bottom bed 52 when the bottom bed 52 is molded.

In addition, a bed handle 520 may be formed on the front surface of the bottom bed 52. The bed handle 520 may have a structure in which the bottom surface thereof is recessed such that the user holds the bed 50 when the bed 50 is introduced or withdrawn. In addition, the front surface of the bed handle 520 may be formed of the same material as that of the tank handle 411 or of a material having the same texture as that of the tank handle 411 such that the bed handle 520 and the tank handle 411 produce the sense of unity.

The upper bed 51 may be seated on the top surface of the bottom bed 52 and may form an outer appearance of the top surface of the bed 50. The upper bed 51 may be formed of a metal pipe such as stainless to form a neat outer appearance and to be sanitarily managed.

The upper bed 51 may be formed in size to cover the recess part 521 of the bottom bed 52 and may be formed in a plate shape. In addition, a plurality of package seating parts 511 may be formed in the upper bed 51 to seat the seed package 920. The package seating part 511 may be formed in the shape corresponding to the seed package 920, and a plurality of package seating parts 511 may be subsequently disposed. Accordingly, a plurality of seed packages 90 may be disposed in the upper bed 51.

A plurality of package seating parts 511 may be disposed at each of the first half part and the second half part of the center, and may be formed in equal size. In addition, a seating part opening 512 may be formed in the package seating part 511. The seating part opening 512 allows a portion of the seed package to pass through the seating part opening and to make contact with water collected in the bottom bed 52.

At least one seating part opening 512 may be formed in each package seating part 511. One or more seating part openings 512 may be formed depending on the structure of the seed package 90. In addition, the seating part opening 512 may be positioned in an area corresponding to the water collecting part 523.

In detail, when the upper bed 51 is seated in the bottom bed 52, the seating part opening 512 is positioned on the water collecting part 523 such that the water stored in the water collecting part 523 may be supplied to the seed package 90 through the seating part opening 512.

According to the present embodiment, the water collecting part 523 is provided in a widthwise direction at the center of the bottom bed 52. Accordingly, the seating part openings 512 may be formed to be positioned closely to the center of the upper bed 51 such that the seating part openings 512 is positioned at an upper portion corresponding to an inner part of the water collecting part 523. The seating part openings 512 may be variously positioned depending on the arrangement and the shape of the water collecting part 523.

Meanwhile, a bed bracket 54 may be provided on the bottom surface of the bottom bed 52. The bed bracket 54 may be positioned at the center of the second half part of the bottom bed. In addition, the bed bracket 54 may be positioned to cover the water sensing member 526 exposed to the bottom surface of the bottom bed 52 at the lower portion. In addition, the bed bracket 54 may be fixedly mounted on the bottom cover 55.

The bottom cover 55 may be formed in the plate shape, and may be bent to have a bottom surface and a rear surface to cover the second half part of the bottom bed 52 below. In addition, the bed bracket 54 may be mounted on the bottom case 19.

The bottom cover 55 may be fixedly mounted on the inner case 140. Accordingly, the bottom cover 55 is maintained in the fixed state even when the bed 50 is withdrawn or introduced. In addition, when the bottom bed 52 is introduced, it is possible to supply power to the water sensing member 526. To the contrast, when the bottom bed 52 is withdrawn, it is impossible to supply power to the water sensing member 526.

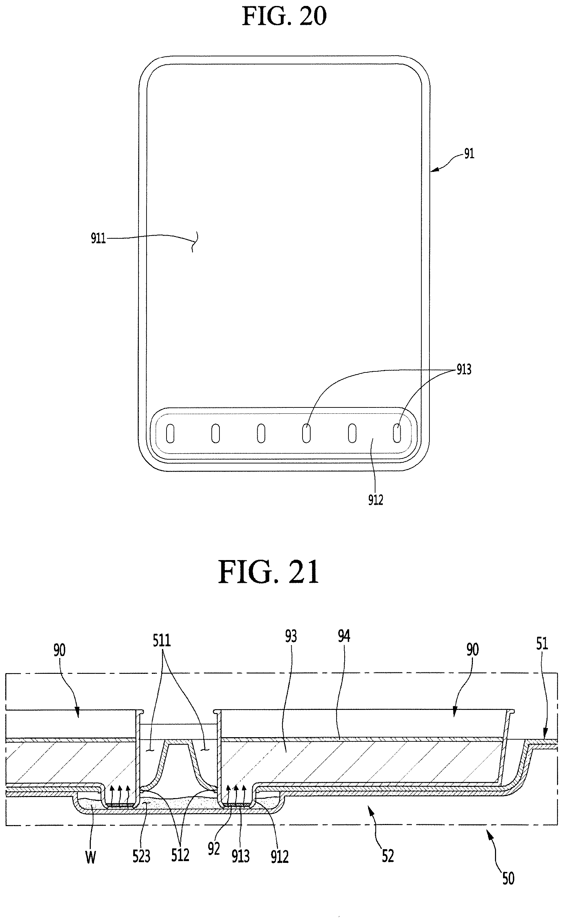

FIG. 19 is an exploded perspective view of the seed package seated on the bed. In addition, FIG. 20 is a plan view of a port which is one component of the seed package. In addition, FIG. 21 is a cross sectional view illustrating that the seed package is seated on the bed.

As illustrated in the drawing, the seed package 90 seated on the upper bed 51 includes a medium 93 having a seed and a nutrient solution provided in a port 91 having a shape corresponding to the package seating part 511. The seed package 90 may be configured to include a nutrient solution suitable for the plant being cultivated

The seed package 90 may be configured according to types of plants that may be cultivated by the apparatus 1 for cultivating plants. In this case, the seed packages 90 having various types of plants have the same size and may have a size set to be received in the package seating part 511. Accordingly, the user may select the seed package 90 of the plant to be cultivated and may seat the seed package at a desired position on the bed 50 to start cultivating the plant.

The port 91 of the seed package 90, which is a container to form a space 911 receiving the seed and the medium, has an open top surface and has the size and the shape corresponding to those of the package seating part 511. In addition, a port protrusion part 912 may be formed on the bottom surface of the port 91 to have the shape corresponding to the seating part opening 512. The port protrusion part 912 is formed to pass through the seating part opening 512 when the seed package 90 is seated in the package seating part 511.

In addition the port protrusion part 912 may extend to the position in which the lower end of the port protrusion part 912 makes contact with or is adjacent to the bottom surface of the water collecting part 523 In addition, a water inlet 913 may be formed in the bottom surface of the port protrusion part 912. An absorption sheet 92 may be provided inside the port protrusion part 912 to absorb the water. The absorption sheet 92 may be formed of various materials, such as non-woven fabric, felt, sponge, or the like to absorb water.

Accordingly, as illustrated in FIG. 21, in the state that the seed package 90 is seated in the package seating part 511, the port protrusion part 912 is positioned inside the water collecting part 523 having water. In addition, the water in the water collecting part 523 may be introduced through the water inlet 913 of the port protrusion part 912 and may be supplied into the port 91 through the absorption sheet 92. The water supplied into the port 91 may be mixed with the nutrient solution of the medium 93, and may be supplied to the seed or the plants such that the seed or the plants are actively grown. In addition, the package cover 94 is provided on the inner top surface of the port 91, that is, the top surface of the medium 93 to protect the seed in the medium 93 and the port 91.

The medium 93 may include the nutrient solution necessary for grow the plants and may be configured such that the plants is grown at a proper speed only when only water is supplied without supplying additional ingredients. In addition, the nutrient solution is present only in a cartridge and only water is supplied to the bed 50 inside the apparatus 1 for cultivating plants. Accordingly, the apparatus 1 for cultivating plants, especially, the water tank 40 and the water supply pipes 497 and 498 may be basically prevented from being contaminated due to the nutrient solution. The inner part of the apparatus 1 for cultivating plants may be constantly maintained in the clean state due to the above structure. In addition, even under the environment that various types of plants are cultivated, proper nutrients may be supplied.

Meanwhile, to easily seat the seed package 90 and facilitate the management and the harvest of the plants grown on the bed 50, the bed 50 may have a structure that the bed 50 is introduced or withdrawn. In addition, in the procedure that the bed 50 is withdrawn, the water is prevented from being supplied. The water has to be supplied after the water level is identified by the water sensing member 526 in the state that the bed 50 is introduced. To this end, the bed 50 has the structure that power is selectively supplied to the water sensing member 526 when the bed 50 is introduced or withdrawn.

Hereinafter, the structure of supplying power to the water sensing member 526 will be described in more detail with reference to accompanying drawings.

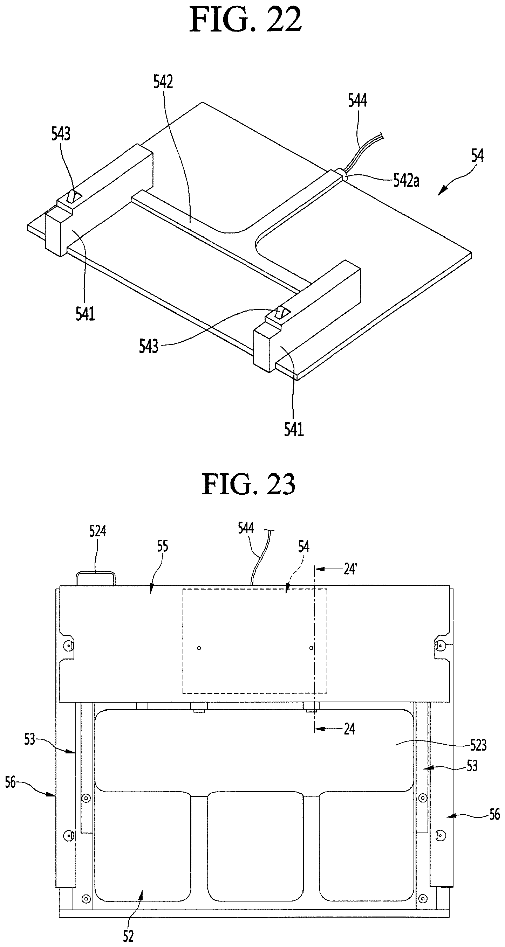

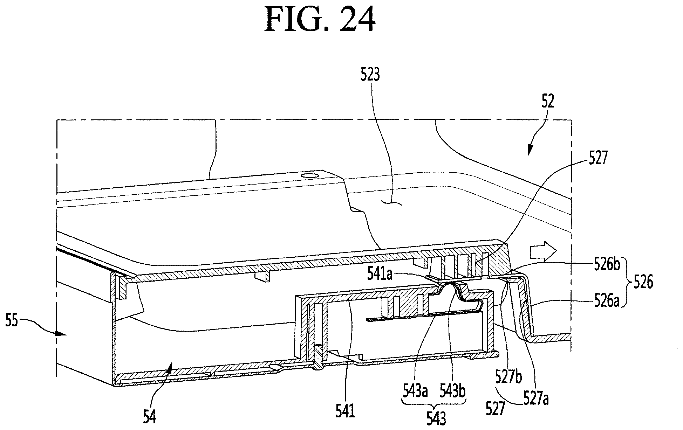

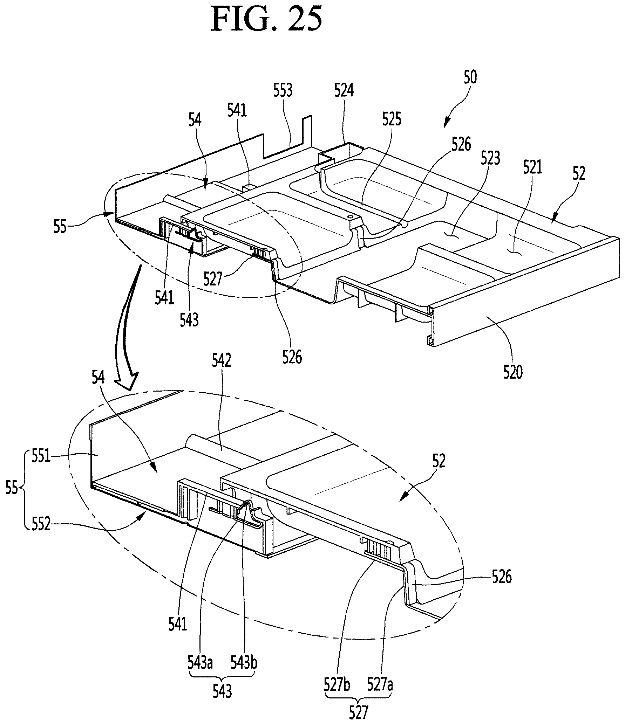

FIG. 22 is a perspective view illustrating a bed bracket which is one component of the bed. In addition, FIG. 23 is a bottom view of the bed when the bed is viewed from the bottom. In addition, FIG. 24 is a perspective view of a part cut-out taken along line 24-24' of FIG. 23 In addition, FIG. 25 is a cut-out perspective view illustrating the bottom bed is withdrawn.

As illustrated in the drawings, the bed 50 has the structure of being introduced or withdrawn through the introduction/withdrawal guide 56 disposed at opposite side portions of the bed 50, in the state that the bed 50 is disposed in the apparatus 1 for cultivating plants. In this case, the bottom cover 55 to form the bottom surface of the rear portion of the bed 50 and the bed bracket 54 coupled to the bottom cover 55 are maintained in the state of being fixedly mounted on the inside of the cultivating space 11, and the bottom bed 52 and the upper bed 51 seated in the bottom bed 52 are introduced or withdrawn.

In the procedure that the bottom bed 52 moves back and forth, the water sensing member 526 may be selectively connected to or disconnected from a power terminal 543 of the bed bracket 54. Accordingly, in the state that the bottom bed 52 is completely introduced or withdrawn, power is supplied to the water sensing member 526 such that the sensing of water is activated. To the contrast, in the state that the bottom bed 52 is withdrawn, it is impossible to supply power. As described above, water may be supplied to the bottom bed 52 depending on the state of the water sensing member 526 and the sensing state of water by the water sensing member 526.

In detail, the bottom cover 55 may be formed in the shape of a plate including a metal material, corresponding to the width of the bed 50, and opposite end portions of the bottom case 55 may be fixedly mounted on the inner case 140. In addition, the bottom cover 55 may cover a portion of the bottom surface and the rear surface of the bottom bed 52 in the state that the bottom cover 55 is mounted. The bottom cover 55 may include a bottom surface part 552 vertically bent and a rear surface part 551. The bottom surface part 552 may cover the rear portion of the bottom surface of the bottom bed 52 and the rear surface part 551 may cover the rear surface of the bottom bed 52.

The rear surface part 551, which extends bidirectionally, may extend to the lower end portion of the blower assembly 80 positioned at the upper portion. The extending upper end portion of the rear surface part 551 is slightly spaced apart from the lower end portion of the blower assembly 80. The flowing air is directed toward the inside of the blower assembly 80 beyond the upper end portion of the rear surface part 551 and the lower end portion of the blower assembly 80. In addition, the rear surface part 551 may cover the evaporator 31 disposed at the rear portion such that the evaporator 31 is not exposed to the outside in the state that the bottom bed 52 is withdrawn. In addition, the rear surface part 551 may be disposed adjacent to the lower end portion of the blower assembly 80 to prevent the evaporator 31 from being exposed to the outside. In addition, the rear surface part 551 may cover the water supply pipes 497 and 498 provided on the rear surface of the cultivating space 11 and another component, such as the water supply pipe holder 48 provided in the inner rear plate 146 such that the components are not exposed to the outside.

In addition, a rear surface opening 553 may be formed in one side of the rear surface part 551 corresponding to the water supply part 524. The rear surface opening 553 may have a size corresponding to the water supply part 524. When the bed 50 is introduced, the water supply part 524 may be inserted to pass through the rear opening 553. The actual supplying of water to the water supply part 524 is performed in a rear space of the rear surface part. Accordingly, the water supply pipes 497 and 498 may be prevented from being exposed and the water supplied to the bed 50 may be prevented from being scattered around the bed 50.

The bottom surface part 552 may extend from the rear end portions of the bottom bed 52 to the water collecting part 523 and may extend to the position to cover a portion of the water sensing member 526. Meanwhile, the bed bracket 54 may be provided on the bottom surface part 552. The bed bracket 54 may be positioned between the bottom bed 52 and the bottom cover 55 and may have a power terminal selectively contacting the water sensing member 526.

In detail, the bed bracket 54 may be formed by injection molding with a plastic material, is formed in a plate shape, and is mounted at the center of the bottom surface part 552 of the bottom cover 55. The top surface of the bed bracket 54 may be disposed to face the bottom surface of the bottom bed 52.

A pair of terminal mounting parts 541 protruding upward from opposite sides of the top surface of the bed bracket 54 may be positioned at positions corresponding to horizontally extending parts 526b. That is, the terminal mounting part 541 may be positioned vertically below the horizontally extending part 526b in the state that the bottom bed 52 is introduced. The terminal mounting part 541 may longitudinally extend in the front-back direction.

A terminal hole 541a is formed in the top surface of the terminal mounting part 541 and a portion of the power terminal 543 may be exposed through the terminal hole 541a. The power terminal 543 may be fixedly mounted in an internal space of the terminal mounting part 541 The power terminal 543 may include a contact part 543b bent to be inclined forward and backward and a fixing portion 543a extending from one side of the contact part 543b and fixed to the inside of the terminal mounting part 541. The fixing part 543a is fixed to the terminal mounting part 541 by a screw fastened at the lower portion and the contact part 543b is configured to protrude to the outside through the terminal hole 541a. The end portion of the fixing part 543a may be connected with an electric wire 544 introduced into the terminal mounting part 541 to supply power.

A wire guiding part 542 may be interposed between a pair of the terminal mounting parts 541. The wire guiding part 542 is formed to be recessed in the bottom surface of the bed bracket 54 and provides a space in which the electric wire 544 is received when the bed bracket 54 is coupled to the bottom cover 55. In addition, the wire guiding part 542 may be formed to connect both terminal mounting parts 541 and configured to extend from the center of the bed bracket 54 to the rear end portion of the bed bracket 54. Therefore, the electric wires 544 connected to the power terminals 543 disposed on both sides may extend to the rear end [portion of the bed bracket 54 along the wire guiding part 542.

The rear end portion of the wire guiding part 542 further protrudes to form a wire outlet part 542a. When the bed bracket 54 is mounted on the bottom cover 55, the wire outlet part 42a passes through the rear surface part 551, and the electric wires 544 may be connected with connectors 111, 112, and 113 on a rear wall surface of the cultivating space 11 without being exposed to the outside.

Meanwhile, in the state that the bottom bed 52 is completely introduced, the water sensing member 526 may be in contact with the power terminal 543 as illustrated in FIG. 24. In this case, the horizontally extending part 526b of the water sensing member 526 makes contact with the contact part 543b of the power terminal 543. The contact part 543b may be maintained in the contact with the water sensing member 526 in the state that the contact part 543b is pressed.

In this state, power may be supplied to the water sensing member 526, and the operation of the water sensing member 526 may be activated. Accordingly, when the water is stored in the water collecting part 523, the water sensing members 526 at opposite sides are electrically conducted to prevent the pump 494 from operating. To the contrast, when the water is absent in the water collecting part 523 in the state that the power is supplied to the water sensing member 526, the water sensing members 526 at opposite sides are electrically not conducted and thus the pump 494 and the water supply valve 496 are driven, so water may be supplied to the bed 50.

In addition, as illustrated in FIG. 25, when the user withdraws the bed 50, the bottom bed 52 is withdrawn in the state that the bed bracket 54 and the bottom cover 55 are fixed.

At the moment when the bottom bed 52 is withdrawn, the power terminal 543 and the water sensing member 526 are separated from each other, and power supply to the water sensing member 526 is cut off. In other words, the power supply to the water sensing member 526 is stopped from the moment when the bottom bed 52 is withdrawn. In this state, the pump 494 and the water supply valve 496 are forcibly stopped not to operate. When the pump 494 is driven or the water supply valve 496 is opened in the state that the bed 50 is withdrawn, water supplied through the water supply pipes 497 and 498 may not be supplied to the bed 50, but spilled. As described above, the operation of the pump 494 or the water supply valve 496 may be prevented by sensing the withdrawing state of the bed 50.

An additional electric wire is not placed in the bottom bed 52 in which the water sensing member 526 is provided, but the electric wire 544 is placed in the fixed bottom cover 55, thereby preventing the electric wires 544 from interfering with each other when the bottom bed 52 is introduced or withdrawn, and smoothly introducing or withdrawing the bottom bed 52.

The opposite end portions of the bed 50 may be supported by the introduction/withdrawal guides 56 provided on opposite side surfaces inside the cabinet 10, and the bottom bed 52 may slide along the introduction/withdrawal guides 56 such that the introduction or the withdrawal of the bottom bed 52 may be guided. Hereinafter, the structure of the guide and the introduction and withdrawal structure of the bed 50 will be described with reference to the drawings.

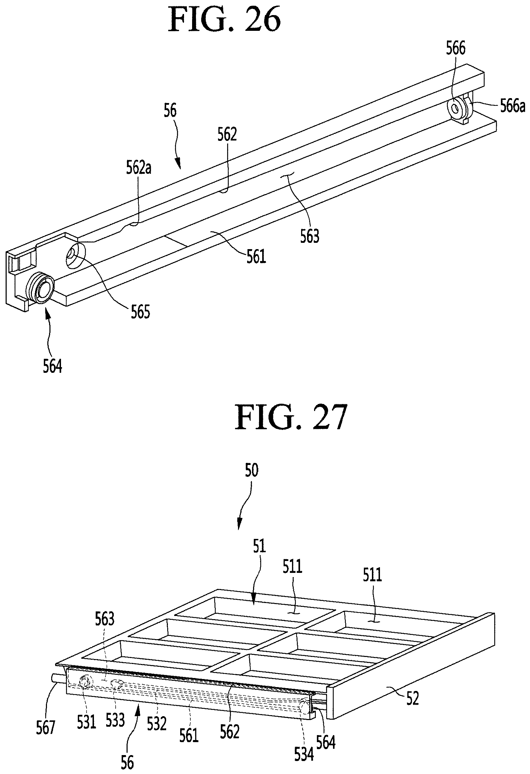

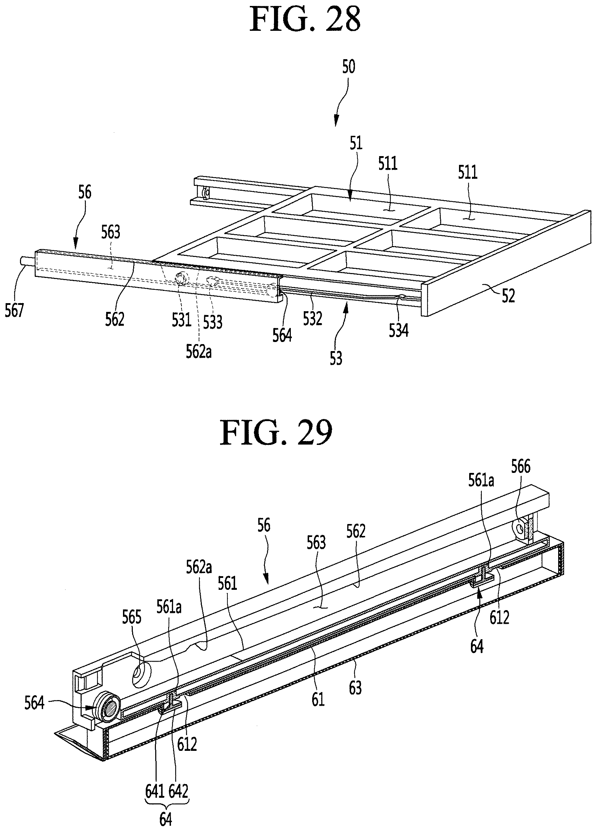

FIG. 26 is a perspective view of the introduction/withdrawal guide for introducing or withdrawing the bed. In addition, FIG. 27 is a view illustrating that the bed is introduced. In addition, FIG. 28 is a view illustrating that the bed is withdrawn.

As illustrated in the drawings, a pair of introduction/withdrawal guides 56 are provided at opposite side portions of the cabinet 10 to support opposite end portions of the bed 50. The introduction/withdrawal guides 56 may be provided in the same structure while facing each other. The introduction/withdrawal guide 56 longitudinally extends in the front-rear direction such that the bed 50 has a distance for withdrawing.

A guide groove 563 may be formed to be recessed in the introduction/withdrawal guide 56 while extending in the front-rear direction. The guide groove 563 may receive a bed roller 531 mounted on the rear end portion of the bed side 53. In addition, the guide groove 563 may extend from the front end portion to the rear end portion of the introduction/withdrawal guide 56 such that the bed roller 531 moves along the guide groove 563. In this case, the bed roller 531 may move by rotating while making contact with an inner top surface 562 of the guide groove 563 and an inner bottom surface 561 of the guide groove 563.

Meanwhile, the top surface 562 of the front end portion of the guide groove 563 may be inclined downward. Accordingly, when the bottom bed 52 is separated and assembled, the bed roller 531 may be easily inserted. In addition, a withdrawing groove 562a may be formed in one side of the top surface of the guide groove 563. The withdrawing groove 562a may receive a portion of the bed roller 531 when the bottom bed 52 is withdrawn by a set distance. Accordingly, when the bottom bed 52 is withdrawn by the set distance for facilitating work, the guide roller 564 may be received in the withdrawing groove 562a. In such a state, since the bottom bed 52 is not easily moved in the front-rear direction, but maintained in the state withdrawn by the set distance, a user may easily carry out jobs such as seating the seed package 90 or harvesting the plants.

A rear stopper 566a may protrude from the rear end portion of the guide groove 563. When the bottom bed 52 is completely introduced, the rear stopper 566a supports the bed roller 531 such that the bed roller 531 does not move rearward any more. A buffer member 566 formed of an elastic material, such as rubber or urethane, may be mounted on the rear stopper 566a to reduce the impact when making contact with the bed roller 531.

In addition, the introduction/withdrawal guide 56 may be formed at the rear end portion thereof with a guide protrusion to protrude rearward, be inserted into an inner wall surface of the cultivating space 11, and be restricted. In addition, the guide groove 563 may be formed in the inner side surface thereof with a screw hole 565 coupled to a screw to fix the introduction/withdrawal guide 56. Accordingly, the introduction/withdrawal guide 56 may be firmly fixed and mounted to the sidewall of the cultivating space 11 through the guide protrusion 567 and the coupling of the screw.

In addition, the guide roller 564 may be provided on the front end portion of the introduction/withdrawal guide 56. The guide roller 564 may be positioned at the slightly lower portion from the center of the introduction/withdrawal guide 56 in the vertical direction, and may make contact with the side rib 532 formed on the bed side 53 such that the bottom bed 52 may be more smoothly introduced or withdrawn.

Meanwhile, the bed rollers 531 and the side ribs 532 may be formed on both side surfaces of the bottom bed 52, that is, the bed side 53. The bed roller 531 may be rotatably mounted at the rear end portion of the bed side 53 and rotated in a state of being received in the guide groove 563 to smoothly withdraw the bottom bed 52.

The side ribs 532 may extend from the front of the bed roller 531 to the front end portion of the bed side 53. The side ribs 532 protrude in a side direction from the upper and lower central portions of the bed side 53 and allow the guide roller 564 to make contact with the bottom surface of the side ribs 532 to roll.

In other words, as illustrated in FIG. 28, the bed roller 531 makes contact with the guide groove 563 and the guide roller 564 makes contact with the side rib 532 in the procedure that the bottom bed is withdrawn. Therefore, the bottom bed 52 may be withdrawn while maintaining a stable supporting state without sagging or vertical flowing when the bottom bed 52 is withdrawn.

Meanwhile, a rear restricting part 533 formed to be inclined downward may be formed at a rear end of the side rib 532. The rear restricting part 533 interferes with the guide roller 564 when the bottom bed 52 is completely withdrawn, such that the bottom bed 52 is not easily released.

In addition, an introduction groove 534 may be formed in the first half part of the side rib 532. The introduction groove 534 may be formed at a position corresponding to the guide roller 564 in the state that the bottom bed 52 is completely introduced.

The introduction groove 534 may be formed to partially receive an upper portion of the guide roller 564. Accordingly, as illustrated in FIG. 27, the guide roller 564 is received in the introduction groove 534 in the state that the bottom bed 52 is completely introduced. Accordingly, the bottom bed 52 is not arbitrarily withdrawn, but maintained in the introduced state.

Through the above structure, the bottom bed 52 may stably maintain the introduction state and the withdrawal state, and may be prevented from flowing due to external vibration or an impact. In addition, when the user introduces or withdraws the bottom bed 52, the user may smoothly introduce or withdraw the bottom bed 52 by the bed roller 531 and the guide roller 564.

### [Light assembly mounting structure]

Meanwhile, the light assembly 60 to irradiate light toward the bed 50 may be mounted above the bed 50. Hereinafter, the structure and mounting structure of the light assembly 60 will be described in more detail with reference to the drawings.

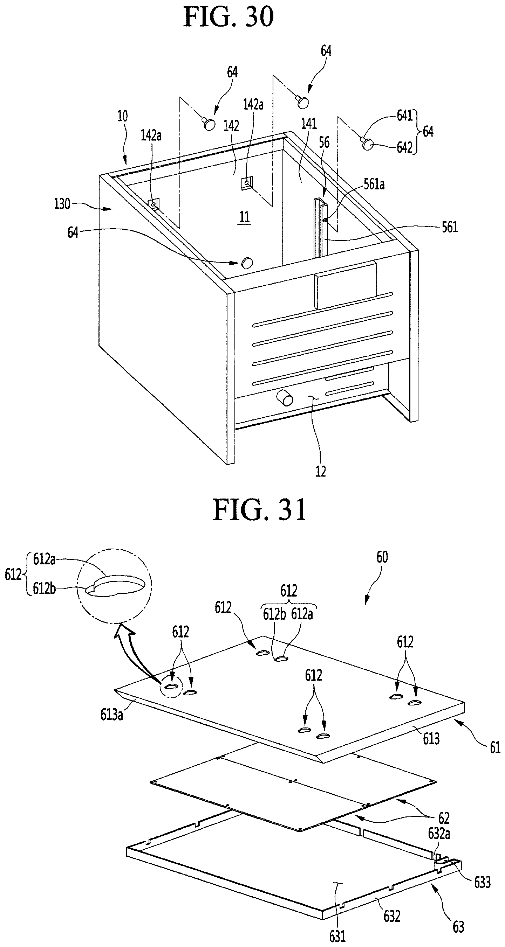

FIG. 29 is a sectional view illustrating the state that the light assembly is mounted on the introduction/withdrawal guide. FIG. 30 is a view illustrating a coupling structure of a light mounting member to mount the light assembly.

The light assembly 60 is disposed above the bed 50 and may irradiate light upward from the bed 50. In addition, the light assembly 60 may minimize the loss of the cultivating space 11 and may have an arrangement structure representing higher space utilization.

To this end, the light assembly 60 may be disposed at a top surface of the cultivating space 11 and a bottom surface of the bed 50 disposed above. In particular, the light assembly 60 may have the same structure regardless of the mounting position. Therefore, both the light assembly 60 disposed above and the light assembly 60 disposed below may have the same mounting structure.

Hereinafter, the detailed description will be made with reference to the drawings. The light assembly 60 may be mounted on the inner surface of the cabinet 10 and the introduction/withdrawal guide 56 by a light mounting member 64. In other words, the light assemblies 60 may be mounted at various positions inside the cultivating space 11 by using the same light mounting member 64.

In addition, the cabinet 10 may be formed in a top surface thereof with a cabinet coupling hole 142a to mount the light mounting member 64, and the introduction/withdrawal guide 56 may be formed therein with a guide coupling hole 561a. The cabinet coupling hole 142a and the guide coupling hole 561a may have the same shape except for the positions thereof, so the light mounting members 64 having the same structure may be mounted in the cabinet coupling hole 142a and the guide coupling hole 561a.

The cabinet coupling hole 142a may be formed in the inner upper plate 142 defining the top surface of the cultivating space 11. The cabinet coupling holes 142a may be provided in the first half part and the second half part and left and right sides of the cultivating space 11, and four cabinet coupling holes 142a are formed to stably fix four corners of the top surface of the light assembly 60.

The light mounting member 64 may include a mounting member coupling part 641 engaged with the cabinet coupling hole 142a or the guide coupling hole 561a and a mounting member head 642 to restrict the light mounting member 64.

The mounting member coupling part 641 may be formed in the shape of a thread and coupled to the cabinet coupling hole 142a or the guide coupling hole 561a in a screw scheme to firmly mount the light assembly 60. In addition, the mounting member coupling part 641 may have a length longer than the depth of the cabinet coupling hole 142a or the guide coupling hole 561a.

The mounting member head 642 may be formed at the lower end portion of the mounting member coupling part 641 and may be formed in the shape of a disc having a predetermined size. The mounting member head 642 may be formed corresponding to the size of an insertion part 612a of a case restricting hole 612 formed in the top surface of the light assembly 60. Accordingly, the mounting member head 642 may be inserted into the case restricting hole 612 when the light assembly 60 is mounted.

Meanwhile, in the state that the light mounting member 64 is coupled to the inner surface of the cabinet 10 or the introduction/withdrawal guide 56, the mounting member head 642 may be spaced apart from the inner upper plate 142 and the introduction/withdrawal guide 56 by a set distance. The set distance may be formed corresponding to the thickness of the light case 61 forming the top surface of the light assembly 60.

The case restricting hole 612 formed in the top surface of the light case 61 may include an insertion part 612a and a restriction part 612b. The insertion part 612a is formed in size equal to or slightly larger than the mounting member head 642 such that the light assembly 60 is inserted into the insertion part 612a.

In addition, the restriction part 612b may be formed in the shape of more being recessed forward from the front end portion of the insertion part 612a as illustrated in FIG. 31. The restriction part 612b may be formed in size slightly larger than the sectional surface of the mounting member coupling part 641 and smaller than the size of the insertion part 612a.

Accordingly, when the light case 61 is moved rearward in the state that the mounting member head 642 is inserted into the insertion part 612a, the mounting member coupling part 641 is inserted into the restriction part 612b. In this case, the mounting member head 642 restricts the circumference of the restriction part 612b. In other words, as illustrated in FIG. 29, the circumference of the restriction part 612b may be inserted into the space between the mounting member head 642 and the introduction/withdrawal guide 56 and restricted. To the contrast, when the light case 61 is moved forward in the state that the light case 61 is mounted, the mounting member head 642 is moved toward the insertion part 612a so it is possible to separate the light assembly 60.

Meanwhile, the guide coupling holes 561a may be formed in the first half part and the second half part of the bottom surface of the introduction/withdrawal guide 56. Since the introduction/withdrawal guides 56 are provided at the left and right sides of the cultivating space 11, four light mounting members 64 are provided to fix four corners of the top surface of the light assembly 60.

As described above, the light mounting members 64 having the same structure are mounted on the inner upper plate 142 and the introduction/withdrawal guide 56, respectively, so the light assemblies 60 having the same structure may be mounted regardless of the mounting positions thereof. In other words, the light assemblies 60 having a single structure may be mounted at various positions.

The introduction/withdrawal guide 56 may be further provided depending on the number of the beds 50 disposed in the cultivating space 11. Even if a plurality of introduction/withdrawal guides 56 are vertically disposed, the light mounting members 64 are mounted in the respective introduction/withdrawal guides 56 such that the light assembly 60 is mounted.

The light assembly 60 may include the light case 61 formed therein with a receiving space 611 and fixedly mounted by the light mounting member 64, an light emitting device (LED) module 62 inside the light case 61, and a light cover 63 to cover the light case 61.

### [Light assembly structure]

Hereinafter, the structure of the light assembly 60 will be described in more detail with reference to accompanying drawings.

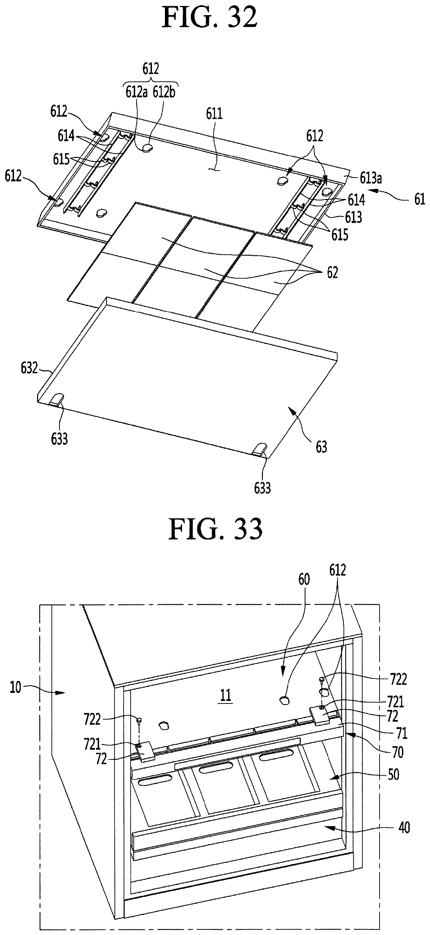

FIG. 31 is an exploded perspective view of the light assembly when viewed the light assembly from the top. In addition, FIG. 32 is an exploded perspective view of the light assembly when viewed from the bottom.

As illustrated in the drawings, the light assembly 60 may have the size corresponding to the top surface of the cultivating space 11 or the bed 50. Accordingly, the light assembly 60 may uniformly irradiate light to the entire area of the bed 50 disposed below.

The light assembly 60 may include the light case 61 having an open bottom surface and receiving the LED module 62 therein. The light case 61 may include a frame 613 formed in the shape of a rectangular plate shape and extending downward along the circumference of the light case 61. A front surface 613a of the frame 613 is inclined. Accordingly, when the user opens the door 20, the exposure of the light assembly 60 may be minimized.

In addition, the light cover 63 may be formed in the top surface thereof with a plurality of case restricting holes 612. The case restriction holes 612, which are coupled to the light mounting member 64, may be formed at four corners of the top surface of the light cover 63. In addition, when the positions of the light mounting members 64 coupled to the introduction/withdrawal guide 56 and the inner upper plate 142 are different from each other, case restriction holes 612 are further formed at corresponding positions for the coupling of all light mounting members 64. Accordingly, as illustrated in FIG. 31, eight case restriction holes may be formed. In addition, when the positions of the light mounting members 64 are the same, four case restriction holes 612 may be formed.

The case restricting hole 612 may include the insertion part 612a formed in size corresponding to the mounting member head 642 and the restriction part 612b formed to be more recessed in front of the insertion part 612a. In this case, the restriction part 612b may be formed to be greater than the thickness of the mounting member coupling part 641 and to be less than the size of the mounting member head 642.

Accordingly, the light case 61 is moved in the front-rear direction in the state that the mounting member head 642 is inserted into the insertion part 612a, so the light assembly 60 may be mounted or separated.

Wire guide ribs 614 may be formed at opposite sides under the light cover 63 to guide wires connected with the LED module 62. The wire guide rib 614 longitudinally extends in the front-rear direction and a pair of wire guide ribs 614 may be disposed at each of left and right sides. The pair of the wire guide ribs 614 are spaced apart from each other, and a plurality of wire coupling parts 615 may be formed in the space between the wire guide ribs 614.

The wire guide ribs 614 and the wire coupling parts 615 are disposed at opposite side portions and are prevented from interfering with the LED module 62 when the LED module 62 is mounted. In addition, the wire guide ribs 614 and the wire coupling parts 615 are interposed between the case restriction holes 612 and thus prevented from interfering with the light assembly 60 when the light assembly 60 is mounted.

The wire coupling part 615 presses and restricts the wires guided along the wire guide ribs 614, and is formed in the substantially ring shape to simultaneously surround a plurality of wires. The wire coupling parts 615 may be disposed in directions of facing each other at left and right sides. A plurality of wire coupling parts 614 may be formed at regular distances along the wire guide rib 614.

The LED module 62 may be mounted on the light case 61. The LED module 62 may be configured such that a plurality of LEDs are mounted on a substrate. A plurality of the LEDs may be continuously arranged on the substrate at regular distances. The LED may be configured to have a light quantity (wavelength) similar to the sunlight, and may be configured to irradiate light of a color that may promote photosynthesis of the plant.

The LED module 62 may be a plurality of LED modules. For example, the LED module 62 may be arranged in the front-rear direction as illustrated in FIG. 31, or a plurality of the LED modules 62 may be continuously arranged in the left-right direction as illustrated in FIG. 32. In this case, the plurality of LED modules 62 may be configured to make different outputs, or may be configured to emit light of different outputs or different wavelengths depending on the positions of the cultivated plants.

For example, the plants arranged on left and right sides of the bed 50 may less receive light as compared to the plants on the center of the bed 50. Accordingly, the outputs of the LED modules 62 disposed at left and right sides may be made higher than the outputs of the. LED module 62 at the center, so that the plants of the entire bed may uniformly receive light. If necessary, the spacing between or arrangement of the LEDs mounted on the substrate may be adjusted to uniformly irradiate light to the whole beds 50.

Meanwhile, a light cover 63 may be provided on the opened bottom surface of the light case 61. The light cover 63 may be configured to be mounted on the light case 61 to cover the open bottom surface of the light case 61 and to protect the LED module 62 disposed inside.

The light cover 63 may be formed of a transparent material such that light may be transmitted, and a coating or a surface treatment for diffusing light may be added to the bottom surface of the light cover 63.

A frame 632 is formed around the bottom surface of the light cover 63 to provide a space 631 in which the LED module 62 is received inside the frame 632. The frame 632 may be coupled to the light case 61 such that the inner part of the light case 61 is air tight. Meanwhile, a wire outlet 632a may be formed on the rear surface of the light cover 63. The wire outlet 632a, which serves as a passage for introducing or withdrawing internal wires of the light case 61, is configured to be open rearward and to be directed to connectors 111, 112, and 113 on the rear wall surface of the cultivating space 11 such that the introduced or withdrawn wires are not exposed.

A blower assembly mounting part 633 on which the blower assembly 80 may be mounted may be formed on opposite sides of the rear end of the light cover 63. The blower assembly mounting part 633 is formed to be recessed such that a blower bracket 816 provided at opposite sides of an upper end portion of the blower assembly 80 may be inserted.

### [Display assembly structure]

Meanwhile, the display assembly 70 is provided inside the cultivating space 11, and the operation state of the apparatus 1 for cultivating the plants may be displayed to the outside through the display assembly 70. Hereinafter, the display assembly 70 will be described in more detail with reference to the drawings.

FIG. 33 is a view illustrating the state in which the display assembly, which is one component of the apparatus 1 for cultivating plants, is mounted. FIG. 34 is an exploded perspective view of the display assembly.

As illustrated in the drawing, the display assembly 70 includes a display case 71 forming an outer appearance, a display module 74 received in a inner space 711 of the display case 71, and a rear cover 75 that covers the open rear surface of the case 71.

In detail, the display case 71 may be provided in front of the light assembly 60. The display case 71 may be mounted on any one of remaining light assemblies 60 except for the light assembly 60, which is mounted on the top surface of the cultivating space 11, in a plurality of light assemblies 60.

The display case 71 is disposed at the front end portion of the light assembly 60 and may be fixedly mounted on the front end portion of the top surface of the light assembly 60. The lateral length of the display case 71 may correspond to the lateral length of the light assembly 60 and may extend from one end of the culture space 11 to an opposite end of the cultivating space 11. The vertical width of the display case 71 may be equal to or slightly greater than the thickness of the light assembly 60. Therefore, the front surface of the light assembly 60 is obscured by the display assembly 70, and the light assembly 60 may not be exposed to the outside when viewed from the front.

A display opening 712 may be formed in the front surface of the display case 71. The display opening 712 allows the information output from the display module 74 to be viewed to the outside. A display sheet 73 may be provided on the front surface of the display case 71. The display sheet 73 is formed of a transparent or translucent material such that an output screen of the display module 74 exposed through the display opening 712 may be viewed.

Meanwhile, a case mounting part 72 may be provided on left and right sides of the top surface of the display case 71. The case mounting part 72 extend rearward by a predetermined length. The case mounting part 72 may extend rearward and be seated on the top surface of the light case 61. A screw hole 721 is formed in the case mounting part 72 and fixed to the top surface of the light case 61 by a screw fastened to the screw hole 721.

The display module 74 may include a display 742 received inside the display case 71 to output information and a substrate 741 on which the display 742 is mounted. The display 742 may include a touch display 742 allowing the input manipulated by the user. In addition, the display 742 may be exposed to the outside through the display opening 712. If necessary, the display case 71 may further include a button for a manipulation input.

A rear cover 75 may be provided on the open rear surface of the display case 71. The rear cover 75 may be formed with a module mounting part 751 on which the display module 74 is mounted. A rim protruding forward may be formed around the module mounting part, and the rim 752 may be coupled to the display case 71.

In addition, a wire introduction/withdrawal port 753, through which a wire connected to the display module 74 is introduced or withdrawn may be opened in opposite sides of the upper end portion of the module mounting part 751. The wire passing through the wire introduction/withdrawal port 753 may be guided along with the wires of the light assembly 60 through the light case 61. The wire passing through the wire introduction/withdrawal port 753 may be guided rearward through the space between the bed 50 and the display assembly 70 if necessary.

A support part 752 protruding rearward may be formed on the back surface of the module mounting part 751. The support part 752 protrudes rearward to make contact with the front surface of the light assembly 60. In this case, the support part 752 may have an inclined rear surface, and may have a slope corresponding to that of the inclined front surface of the light assembly 60. Therefore, when the display assembly 70 is mounted, the support part 752 is completely in close contact with the front surface of the light case 61 to maintain a stable mounting state.

### [Structure of Blower Assembly]

FIG. 35 is a view illustrating a state in which a blower assembly, which is one component of the apparatus 1 for cultivating plants, is mounted.

As illustrated in the drawing, the evaporator 31 is provided on the rear wall surface of the cultivating space 11, that is, the inner rear plate 146, and the blower assembly 80 may be provided in front of the evaporator 31.

The blower assembly 80 is configured to circulate air at the upper portion of the cultivating space 11 partitioned by the bed 50. Accordingly, the blower assemblies 80 are provided in number corresponding to the number of the beds 50, and are provided at the lower end of the light assembly 60 and the upper portion adjacent to the bed 50.

The blower assembly 80 has the structure in which air is circulated inside the cultivating space 11 such that the air heated or cooled by the heater 102 or the evaporator 31 is discharged at the upper end and air is sucked at a position adjacent to the top surface of the bed 50.

The heater 102 and the evaporator 31 may be disposed in the intermediate area of the inner rear plate 146 in the vertical direction and may at least partially overlap with the blower assemblies 80 at the upper portion and the lower portion. The air heated and cooled by the heater 102 and the evaporator 31 may be circulated by the blower assembly 80 to uniformly cool or heat the entire partitioned spaces inside the cultivating space 11 through one heater 102 and one evaporator 31.

The blower assembly 80 is spaced apart from the inner rear plate 146 such that the cooled or heated air is smoothly introduced and is configured not to interfere with the evaporator 31. In addition, the upper end portion of the blower assembly 80 may be configured to be coupled to the rear end portion of the bottom surface of the light assembly 60.

The blower assembly 80 covers the components provided in the inner rear plate 146 in addition to the evaporator 31 in the state that the blower assembly 80 is installed inside the cultivating space 11, thereby presenting the components from being exposed to the outside.. However, FIG. 35 illustrates that the blower cover 84 forming the front surface of the blower assembly 80 is separated for the explanation of the arrangement relation between the evaporator 31 and the blower assembly 80.

The blower assembly 80 may be formed to longitudinally extend in a lengthwise direction and may be configured corresponding to the length of the inner rear plate 146 in the lengthwise direction. In addition, the air blown by a blowing fan 82 provided at the center portion is branched into the both sides by a blower body 81 and is configured to be discharged forward in a uniform air amount at the outlet side. The detailed structure of the blower assembly 80 will be described in more detail below.

An outlet 171 of the supply duct 17 may be opened at a position lower than the lower portion of the inner rear plate 146, more specifically, the blower assembly 80 disposed below. The supply duct 17 may communicate with the machine compartment 12 to supply carbon dioxide into the cultivating space 11.

Meanwhile, the inner rear plate 146 may include a plurality of connectors 111, 112, and 113. The connectors 111, 112, and 113 are configured to connect wires, which extend from the light assembly 60, the display assembly 70, and the blower assembly 80 in the cultivating space 11. Therefore, it is possible to easily connect electrical components inside the cultivating space 11.

In addition, the second bottom plate 144 may further include a connector 114 to connect electric wires extending from the pump 494, the flow meter 495, and the water supply valve 496. In addition, the connector 114 may be disposed inside the water supply case 49 and may be covered by the water supply case 49.

Hereinafter, the structure of the blower assembly 80 will be described in more detail with reference to the drawings.

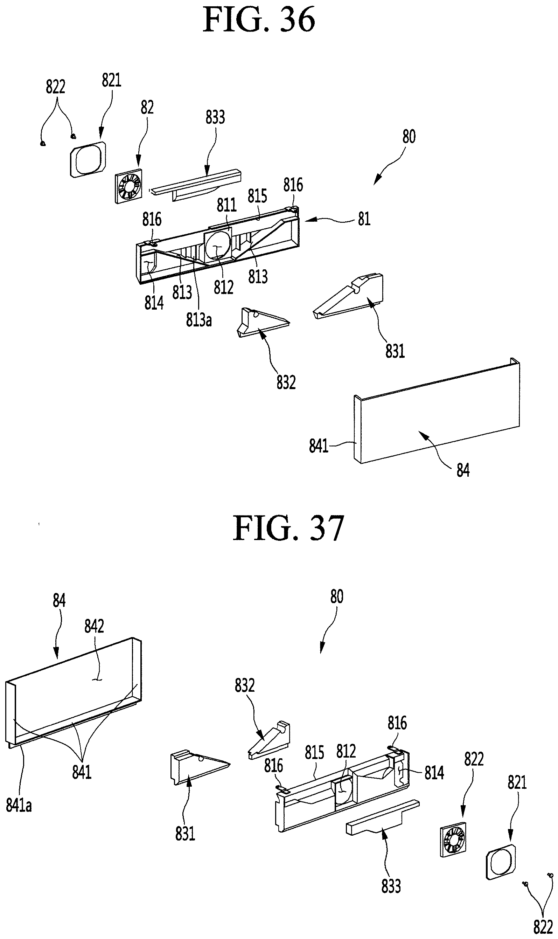

FIG. 36 is an exploded perspective view of the blower assembly when viewed from the front. In addition, FIG. 37 is an exploded perspective view of the blower assembly when viewed from the rear. In addition, FIG. 38 is a perspective view of the blower assembly when viewed from the rear. FIG. 39 is a perspective view of a part cut out taken along line 39-39 'of FIG. 38.

As illustrated in the drawing, the blower assembly 80 includes the blowing fan 82, the blower body 81 on which the blowing fan 82 is mounted, and the blower cover 84 to cover a portion of the inner rear plate 146 including the blower body 81.

In detail, the blowing fan 82 is formed in the shape of a box fan and may be provided at the center of the blower body 81. The blowing fan 82 may discharge forward the air introduced from the rear portion of the blower assembly 80.

The blower body 81 provides a space for mounting the blowing fan 82 and is configured to guide the discharge of the air discharged by the blowing fan 82. The blower body 81 is injection molded with a plastic material and a fan mounting part 811 is formed at the center of the rear surface of the blower body 81 to be recessed in a shape corresponding to the shape of the blowing fan 82. An air hole 812 is formed in the fan mounting part 811 so that air may be introduced into the blowing fan 82 when the blowing fan 82 rotates.

Meanwhile, an air guide 813 is formed on the front surface of the blower body 81 to guide the air discharged from the blowing fan 82 upward. The air guides 813 may be provided on left and right sides of the center of the fan mounting part 811.

The air guides 813 may extend from the lower end portion of the fan mounting part 811 toward opposite sides of the fan mounting part 811 and may have an inclined surface having the height gradually increasing in the extending direction. Therefore, the air blown by the blowing fan 82 flows along the inclined surface, and may be closer to the discharge port formed in the upper end portion of the blower body 81 toward the outside.

Further, a rib 813a extending upward may be further formed on the top surface of the air guide 813. The rib 813a may extend upward from the air guide 813 and may extend in a direction perpendicular to the upper end portion of the blower body 81. The ribs 813a may be connected with the inner surface of the blower body 81 to reinforce the air guide 813 while guiding the air flowing along the air guide 813 upward. Due to the structure of the air guide 813 and the rib 813a, the air discharged from the air blowing fan 82 may be uniformly discharged from the entire area of the discharge port of the blower body 81.

Meanwhile, a discharge guide part 815 may be formed at the upper end portion of the front surface of the blower body 81. The discharge guide part 815 guides the air discharged by the blowing fan 82 to be discharged forward of the blower body 81. The discharge guide part 815 forms a surface more protruding forward from the lower portion toward the upper portion. In other words, the discharge guide part 815 forms an inclined surface or a round surface, and guides the air flowing upward from below such that the air is directed forward. In this case, since the end portion of the discharge guide part 815 is adjacent to the bottom surface of the light assembly 60, the air discharged from the blower assembly 80 may flow forward from the rear end portion of the bottom surface of the light assembly 60 by the discharge guide part 815. When the light assembly 60 emits heat, the light assembly 60 may be cooled due to the air flow.

A connector hole 814 may be formed in one side portion of the blower body 81. Connector holes 814 are formed to open at positions corresponding to the connector 811 and 812 mounted on the inner rear plate 146. Accordingly, when the blower assembly 80 is mounted, the connectors 811 and 812 are inserted into the connector holes 814 not to interfere with each other. The electric wire connected to the blowing fan 82 may be connected to the electric wire through the connector hole 814.

The blowing fan 82 may be maintained to be fixed to the fan mounting part 811 by the fan fixing member 821 having a plate shape and mounted on the fan mounting part 811 and a screw 822 fastened to the blower body 81 through the fan fixing member 821.

A blower bracket 816 inserted into the blower assembly mounting part 633 may be provided on left and right sides of the top surface of the blower body 81. The blower bracket 816 may be formed in a vertically bent shape. One end of the blower bracket 816 is coupled to the top surface of the blower body 81 and an opposite end of the blower bracket 816 may be mounted to the blower assembly mounting part 633 formed at a rear end of the bottom surface of the light assembly 60. Accordingly, the light assembly 60 and the blower assembly 80 may be coupled to each other in a manner of crossing each other perpendicularly to each other. The blower assembly 80 may discharge air forward from the rear end portion of the light assembly 60.

Recessed spaces may be formed on opposite sides of the blower body 81. A recessed space may be formed below the air guide 813. A first guide insulator 101 and a second guide insulator 101 may be mounted in the recessed spaces. A guide recess part 521 is formed in one side of the rear surface of the fan guide 341 and a third guide insulator 101 may be mounted in the guide recess part 521. The cold air generated in the evaporator 31 may be prevented from being directly transmitted forward through the blower assembly 80 by the first to third guide insulators 101.

Meanwhile, the blower cover 84 may be provided in front of the blower body 81 to cover the blower body 81 and the components mounted on the blower body 81. In addition, the blower cover 84 may form an outer appearance of a rear wall surface of the cultivating space 11 in the state that the blower assembly 80 is mounted.

The blower cover 84 may be formed of the same metal material as the inner side plate 141, and may be formed by bending a plate-shaped material. The blower cover 84 may have a rim part 841 that is bent along the circumference of the blower body 84. The blower body 84, in which the blowing fan 82 is mounted, may be received in an inner space defined by the rim part 841.

The top surface of the blower cover 84 is formed to be open. In addition, the top surface of the blower cover 84 may be positioned at a position corresponding to the upper end portion of the blower body 81. Therefore, the air discharged along a discharge guide part 815 may be discharged through the top surface of the opened blower cover 84.

Opposite side surfaces of the blower cover 84 of the rim part 841 may be formed to surround opposite side surfaces of the blower body 81. The blower cover 84 may extend further downward than the blower body 81. The blower cover 84 may extend to the top surface of the bed 50. Accordingly, when the blower assembly 80 is mounted, the rear wall of the space corresponding to the space between the light assembly 60 and the bed 50 is formed. In addition, the components mounted on the inner rear plate 146 may be covered to make the neat outer appearance.

Meanwhile, a portion, which forms the bottom surface of the blower cover 84, of the rim part 84 has an extending length shorter than the opposite side surfaces of the rim part 84. Accordingly, the bottom surface of the blower cover 84 may be spaced apart from the inner rear plate 146 to form a space in which air is introduced downward. In other words, in the state where the blower assembly 80 is mounted, a suction port through which air is sucked is formed on the bottom surface of the blower cover 84

The end portion of the rim part 841 forming the bottom surface of the blower cover 84 may be bent downward to form a bending portion 841a. The bending portion 841a may further extend further downward from the rear portion of the bed 50. Accordingly, the lower end portion of the blower cover 84 is not exposed while the structure of the inner rear plate 146 is covered, thereby making a neat outer appearance. The bending portion 841a is spaced apart from the rear end portion of the bed 50 and the inner rear plate 146 to form air inlets for the air to be introduced into the blower cover 84.

Hereinafter, the air flowing state inside the cultivating space 11 in the state that the blower assembly 80 having the above-described structure is mounted will be described again with reference to the drawings.

FIG. 40 is a sectional view illustrating an air circulation state in the cabinet. FIG. 41 is an enlarged view of part B in FIG. 40.

As illustrated in the drawings, the internal temperature of the cultivating space 11 is sensed by an internal temperature sensor 182, and the set temperature of the cultivating space 11 is maintained depending on the operation of the heater 102 or the evaporator 31. In addition, the air in the cultivating space 11 may be circulated by the driving of the air blowing fan 82 and may be heated or cooled by the heater 102 or the evaporator 31, thereby maintaining the whole temperature of the cultivating space 11 to the uniform temperature.

When the blowing fan 82 is driven, air in the cultivating space 11 flows to the rear end portion of the bed 50 while flowing along the top surface of the bed 50. In this process, the plants growing in the bed 50 are shaken by the flowing air, and the plant growth may be further promoted by this action. To this end, the air blowing fan 82 maintains a predetermined air flow rate, and periodically varies the air flow rate according to occasions to apply appropriate stress to the plants, thereby allowing the plant to grow more rapidly or improve the growth state.

The air flowing to the rear end portion of the bed 50 may be introduced into the blower cover 84 through a space between the lower end portion of the blower cover 84 and the rear end portion of the bed 50. In this case, the shape of the bent portion 841a at the lower end portion of the blower cover 84 may prevent the space, in which the air in the cultivating space 11 is sucked, from being exposed while smoothly introducing air.

The air introduced into the blower cover 84 flows upward and is directed to the blowing fan 82. In this process, the flowing air may be cooled while passing through the evaporator 31 or may be heated by the heater 102. The air in the cooled or heated state is forced to flow forward by the blowing fan 82. The air flowing forward is directed upward while flowing to opposite side surfaces by the air guide 813. In this case, the air discharged is uniformly directed to the discharge guide part 815 by the inclination of the air guide 813 and a rib 813a. More specifically, the distance between the air guide 813 and the discharge guide part 815 is increased at a position close to the air blowing fan 82, so the rapidly flowing air flows to a longer distance. The distance between the air guide 813 and the discharge guide part 815 is shorter as the air guide 813 and the discharge guide part 815 are further apart from the air blowing fan 82, so the air flowing more slowly flows to a short distance. Accordingly, the air discharged through the discharge guide part 815 may be discharged at a constant flow rate in the entire area.

The air discharged through the discharge guide part 815 flows forward along the bottom surface of the light assembly 60, that is, along the light cover 63. In this case, the air flowing along the light cover 63 may lower the heat generated in the operation of the light assembly 60.

The air that flowing forward along the bottom surface of the light assembly 60 flows to the first half part of the cultivating space 11, flows downward, then flows rearward along the bed 50, and then flows into the blower cover 84. The entire portion cultivating space 11 is uniformly heated and the cultivating space 11 is totally maintained at a constant temperature, by continuously circulating the air, so the optimum condition for growing the plants inside the bed 50 may be made.

### [CO₂ circulation structure]

Meanwhile, CO₂ is indispensably required to actively maintain the photosynthesis of plants disposed in the cultivating space 11. A supply duct 17 and a return duct 150 to connect the machine compartment 12 and the inner part of the cultivating space 11 may be further provided to continuously supply CO₂ to the cultivating space 11.

Hereinafter, the structure of the supply duct 17 and the return duct 150 will be described in more detail with reference to the drawings.

FIG. 42 is an open perspective view of the machine compartment of the apparatus 1 for cultivating plants. FIG. 43 is a partial perspective view of the cabinet when viewed from the bottom.

As illustrated in the drawings, the machine compartment 12 is open toward the rear portion of the cabinet 10 and the bottom surface of the machine compartment 12 may be formed by a machine compartment base 121. The compressor 32 and a condenser 33 constituting a cooling cycle may be mounted on the machine compartment base 121. A fan guide 341 may be further provided between the compressor 32 and the condenser 33 and a condenser fan 34 may be provided in the fan guide 341.

The external air is sucked into the condenser 33 as the condenser fan 34 is driven and then flows to the compressor 32 through the condenser fan 34. The condenser fan 34 may force the air flow inside the machine compartment 12 to allow cooling or heat exchange of the condenser 33 and the compressor 32.

Meanwhile, the supply duct 17 communicating with the cultivating space 11 extends to a position adjacent to the condenser fan 34. In this case, the supply duct 17 may extend downward a space, in which the compressor 32 is disposed, of a space defined by the fan guide 341. In particularly, the open lower end portion of the supply duct 17 may be formed toward the condenser fan 34. Accordingly, a separate fan is not required for the supply of CO₂ and the air in the machine compartment 12 may flow into the inlet of the supply duct 17 when the condenser fan 34 rotates. The air in the machine compartment 12 flows into the cultivating space 11 through the supply duct 17.

One side of the return duct 150 spaced away from the supply duct 17 may extend downward. The discharge pipe 152 of the return duct 150 may extend to the blade area of the condenser fan 34. The open lower end portion of the discharge pipe 152 may be formed to face downward. Therefore, the air forcedly blown by the condenser fan 34 rapidly passes through the opening of the discharge pipe 152. Therefore, negative pressure may be formed on the opened bottom surface of the discharge pipe 152, and the internal air of the cultivating space 11 may be introduced into the return duct 150 and discharged to the machine compartment 12.

The air of the machine compartment 12 is supplied through the supply duct 17 to the cultivating space 11 by the rotation of the condenser fan 34 and forcibly supplied into the cultivating space 11, so CO₂ may be supplied into the cultivating space 11. Plants in the cultivating space 11 may perform the photosynthesis using the supplied CO₂.

The air in the cultivating space 11 may be discharged into the machine compartment 12 by the return duct 150. The forced air flow through the supply duct 17 and the return duct 150 enables continuous supply of CO₂ to the cultivating space 11. The amount of air flowing into the cultivating space 11 from the machine compartment 12 may be adjusted according to the kind of a plant to be cultivated and the amount of CO₂ supplied in the growing stage.

Meanwhile, although not illustrated, a filter may be provided in the supply duct 17 or the return duct 150. The filter may prevent dust from entering the inside of the machine compartment 12 or the inside of the cultivating space 11 when the air is introduced. If necessary. In addition, if necessary, an opening/closing mechanism, such as a damper that is opened only in one direction is provided to the supply duct 17 and the return duct 150. Only if necessary, the opening/closing mechanism may be opened to adjust the supply amount of CO₂.

FIG. 44 is a perspective view of a supply duct which is a component of the apparatus 1 for cultivating plants.

Hereinafter, the structure of the supply duct 17 will be described in more detail. The supply duct 17 may longitudinally extend in the vertical direction, and an outlet 171 for discharging air may be formed at an upper end portion of the supply duct 17 and an inlet 175 for introducing air may be formed at a lower portion of the supply duct 17. The inlet 175 and the outlet 171 are formed to face in mutually different directions. In other words, the inlet 175 may be disposed to face the condenser fan 34, and the outlet 171 may be formed to face the rear wall surface of the cultivating space 11.

A flange part 172 is formed around the outlet 171. The flange part 172 is bent outward around the outlet 171 and may be fixed in contact with the inner rear plate 146.

Meanwhile, the supply duct 17 may include a duct upper part 173 and a duct lower part 174. The duct upper part 173, which is a part bent downward from the outlet of the supply duct 17, may be formed in an elliptical shape in cross section. The diameter in the front-rear direction may be formed to be significantly smaller than the diameter in the left-right direction. This structure allows the upper portion of the supply duct 17 to be disposed in a space between the outer case 130 and the inner case 140 where the upper portion of the supply duct 17 is relatively narrow. Although the diameter in the front-rear direction is formed to be smaller, the outlet 171 and the inlet 175 have the same sectional area, so the air passing through the supply duct 17 smoothly flows.

The duct lower part 174 extends from the lower end portion of the duct upper part 173 to the inlet 175. Since the duct lower part 174 is positioned in the inner region of the machine compartment 12, the duct lower part 174 is relatively free from the restriction on the thickness. In order to allow the air blown by the condenser fan 34 to flow more smoothly into the supply duct 17 through the inlet 175, the inlet 175 may be formed in a substantially circle shape as compared to the sectional shape of the duct upper part 173. A duct connecting part 176 may be further formed between the duct upper part 173 and the duct lower portion 174 to naturally connect the duct upper part 173 and the duct lower portion 174.

Hereinafter, the air flow path for supplying CO₂ will be described in more detail with reference to the drawings.

FIG. 45 is a plan view illustrating the arrangement of the supply duct and the return duct in the machine compartment. FIG. 46 is a view illustrating the supply and discharge states of CO₂ through the supply duct and the return duct.

As illustrated in the drawing, the inlet 175 of the supply duct 17 is positioned substantially adjacent to one side of the fan guide 341. The open surface of the inlet 175 is formed to face the blades of the blowing fan 82 and is arranged to be parallel to the front surface of the condenser fan 34 (the surface crossing the rotation axis of the condenser fan).

Therefore, when the condenser fan 34 is rotated, air forcedly blown by the condenser fan 34 is effectively introduced into the inlet of the supply duct 17. In this case, the front-rear direction width D2 of the duct lower part 174 may be larger than the front-rear direction width D1 of the duct upper part 173. The air flowing into the duct lower part 174 flows upward and flows into the duct upper part 173. The air flows through the duct upper part 173 to the rear portion of the blower assembly 80 through the outlet 171.

In this case, the front-rear direction width of the duct upper part 173 is relatively smaller than that of the duct lower part 174, but the cross sectional areas of the duct upper part 173 and the duct lower part 174 are the same, so the loss of an amount of air is not caused.

The air of the machine compartment 12 flowing into the rear portion of the blower assembly 80 includes CO₂ and may be uniformly supplied into the cultivating space 11 by the blower assembly 80. The CO₂ introduced into the cultivating space 11 is involved in the photosynthesis of the cultivated plants. The CO₂ is used for photosynthesis and the air in the cultivating space 11 having the shorter CO₂ is directed to the machine compartment 12 through the return duct 150.

In this case, the outlet of the return duct is opened downward, so the air blown by the condenser fan 34 passes over the outlet 171 of the return duct 150. Accordingly, negative pressure may be formed at the outlet of the return duct 150, and the air in the cultivating space 11 may be introduced into the machine compartment 12.

The return duct 150 is formed such that a duct mounting part 151 formed at the upper portion of the return duct 150 has a slope and has a wider area. When defrost water is generated, the defrost water may be discharged to the machine compartment 12 through the duct mounting part 151 and the discharge pipe 152.

Meanwhile, a bottom cover 55 is provided on a bottom surface of the cabinet 10 to receive electrical components. Hereinafter, the structure of the bottom case 19 will be described in more detail with reference to the drawings.

FIG. 47 is a perspective view illustrating the internal structure of the bottom case, which is one component of the apparatus 1 for cultivating plants.

As illustrated in the drawing, the bottom case 19 may be formed to have an opened top surface, and may be disposed such that the open top surface faces the bottom surface of the cabinet 10. The bottom case 19 may be positioned between the cabinet 10 and the ground surface on which the apparatus 1 for cultivating plants. The bottom case 19 and the electronic components inside the bottom case 19 are not exposed to the outside when viewed from above the apparatus 1 for cultivating plants.

The bottom case 19 has a frame formed along the circumference of the bottom surface of the plane shape. In addition, the bottom case 19 has a space in which the electrical components provided in the internal space 190 of the bottom case 19 are received.

For example, a door switch 195 may be provided in the inner space of the bottom case 19 to sense the opening/closing of the door 20. In addition, a communication unit 185 to communicate with an external device may be formed in the bottom case 19. The communication unit 185 may be configured to perform various wireless communications such as Wi-Fi, ZigBee, NFC, and Bluetooth, to transmit operating information of the apparatus 1 for cultivating plants through the cell phone and the computer of a user, to receive a command, and to store and process user information. In addition, an external temperature sensor 194 is provided inside the bottom case 19 to sense the outdoor temperature. Meanwhile, an external humidity sensor 184 may be further included in the bottom case 19 and an internal humidity sensor 183 may be provided in the cultivating space 11.

Meanwhile, a wire guide part 192 may extend portion laterally at one side of the bottom case 19. The wire guide part 192 may have an open upper portion to receive the wire 195 connected to the door switch 195, the external temperature sensor 194, and the communication unit 185 and may communicate with the space in which the electronic components are received.

### [Whole operation]

Hereinafter, the operation of the apparatus 1 for cultivating plants having the above structure according to an embodiment of the present invention will be described.

FIG. 48 is a block diagram illustrating the flow of a control signal of the apparatus 1 for cultivating plants. FIG. 49 is a view schematically illustrating an operating state of the apparatus 1 for cultivating plants.

As illustrated in the drawing, the seed package 90 is mounted on the bed 50, and water in the water tank 40 is supplied to the bed 50 in a constant amount. In addition, the nutrient solution contained in the seed package 90 may be supplied to the plants inside the seed package 90 together with the water supplied to the bed 50.

The light assembly 60 irradiates light toward the plant growing in the bed 50 through the operation of the light assembly 60. The light assembly 60 may be turned on and off at an appropriate time period depending on the growth condition and environment of the plant. The light assembly 60 is turned on and off according to the actual amount of the sunlight according to the season, thereby providing an environment similar to that in which the plants in the apparatus 1 for cultivating plants grow in the external natural environment.

Plants in the bed 50 are subject to photosynthesis by the light provided by the light assembly 60, and receive the required amount of carbon dioxide through the supply duct 17 in this process. In particular, CO₂ may be supplied to the cultivating space by using the condenser fain 34 without an additional dedicated fan. The air in the cultivating space 11 may be recovered to the machine compartment 12 and may be circulated between the machine compartment 12 and the cultivating space 11.

Meanwhile, when the internal temperature of the cultivating space 11 is excessively low, the heater 102 is driven. When the internal temperature of the cultivating space 11 is excessively high, the cooling cycle is driven and the evaporator 31 is cooled.

The air heated or cooled by the heater 102 or the evaporator 31 is discharged forward through the blower assembly 80. In this case, the air flows forward from the rear end portion of the light assembly 60, and the bottom surface of the light assembly 60 is cooled during the air flow.

The air flowing forward moves downward and then flows from the front end portion of the bed 50 to the rear end portion of the bed 50. The stem and leaf of the plant growing in the bed 50 are shaken by the flow of air flowing from the top surface of the bed 50, thereby significantly improving the state of the plant to be cultivated.

The air introduced into the rear end portion of the bed 50 passes through the space tahat the evaporator and the heater 102 are disposed and may be discharged toward the light assembly 60 by the blowing fan 82.

The air flowing by the driving of the air blowing fan 82 circulates inside the cultivating space 11. In the circulation process, the light assembly 60 is air-cooled and the growth of the plant on the bed 50 may be promoted.

The air passing through the evaporator 31 and the heater 102 may be heated or cooled during repeated air circulation, and the inner part of the cultivating space 11 is continuously and uniformly heated and cooled. Accordingly, the entire portion of the cultivating space 11 may be maintained to a preset temperature.

### [Another Embodiment: At Least Three-Stage Bed /Several Evaporators]

Meanwhile, various embodiments of the present invention may be possible in addition to the above-described embodiments. For example, the cabinet may have a vertically long structure, and a larger number of beds and light assemblies may be provided.

Hereinafter, the present invention will be described with reference to the drawings. In the other embodiments of the present invention, the same reference numerals are used for the same elements as those of the above-described embodiment, and the details thereof will be omitted.

FIG. 50 is a view illustrating the internal structure of an apparatus 1 for cultivating plants according to another embodiment of the present invention.

As illustrated in the drawing, the apparatus 1 for cultivating plants according to another embodiment of the present invention has a long structure in the vertical direction. The cultivating space 11 is formed inside the cabinet 10 and a plurality of beds 50 and the light assemblies 60 corresponding to the beds may be provided.

In addition, the water tank 40 may be provided at the front most portion of the lowest portion of the cabinet 10, a water supply assembly, such as the valve of a pump 494, may be disposed at the rear portion, the machine compartment 12 divided by a partition may be provided at the rear portion of the water supply assembly, and the compressor 32 may be disposed inside the machine compartment 12.

The plurality of beds 50 and the light assembly 60 may be provided inside the cultivating space 11. Only the light assembly 60 is provided on the uppermost surface of the cultivating space 11, and the bed 50 at the lowermost part of the cultivating space 11 may be configured to cover the water thank 40 and the pump 494. The light assembly 60 and the bed 50 may be disposed in a vertical direction in the space between the uppermost portion and the lowermost portion of the cultivating space 11.

In addition, the length of the cabinet 10 is increased. In this case, when the evaporator 31 and the heater 102 are provided only any one side, the entire inner part of the cabinet 10 may not be cooled or heated.

Accordingly, the blower assembly 80 may be provided on the rear side of the space between the bed 50 and the light assembly 60 above. The evaporator 31 and the heater 102 may be subsequently disposed in the rear portion of the blower assembly 80. The evaporator 31 and the heater 102 may be formed in each space formed by the bed 50 and the light assembly 60.

Even in the situation that the length of the cabinet 10 is increased, each space of the bed 50 may be effectively maintained to a set temperature due to the above-described structure.

Meanwhile, a plurality of heaters 102 and evaporators 31 may be provided in the respective spaces to independently adjust the temperatures of the corresponding spaces. Accordingly, the spaces defined by the beds 50 may be maintained at different temperatures, thereby providing an optimal temperature environment suitable for various plants.

According to an aspect, according to an embodiment of the present invention, an apparatus for cultivating plants, may include a cabinet having a cultivating space, a door to open or close the cultivating space, a bed provided in the cultivating space and used to cultivate the plants, a light assembly to irradiate the bed with light necessary for photosynthesis, a water tank to store water to be supplied to the bed, and a machine compartment provided at a lower portion of the cabinet, and separated from the cultivating space to communicate with an external space and to receive a compressor and a condenser which form a cooling cycle to adjust a temperature of the cultivating space. The water tank may be provided inside the cultivating space spaced apart from the machine compartment.

In addition, the water tank may be provided in front of the machine compartment and exposed when the door is open.

In addition, the machine compartment may have at least a portion open through a rear surface of the cabinet.

In addition, the apparatus may further include a pump and a valve connected with the water tank through a pipe to supply water to the bed. The pump and the valve may be provided inside the cultivating space.

In addition, the pump and the valve may be interposed between the machine compartment and the water tank.

In addition, the pump and the valve may be covered by the water tank.

The water tank may be provided detachably from the cultivating space in a state that the door is open.

A top surface of the machine compartment and a top surface of the water tank may be covered by the bed.

In addition, a front surface of the bed and a front surface of the water tank are positioned on the same plane.

The apparatus may further include a duct to allow the machine compartment and the cultivating space to communicate with each other such that air of the machine compartment is introduced into the cultivating space.

According to another aspect, according to an embodiment of the present invention, an apparatus for cultivating plants may include a cabinet having a cultivating space, a door to open or close the cultivating space, a bed provided in the cultivating space and used to cultivate the plants, a light assembly provided above the bed to irradiate the bed with light, a machine compartment provided at a rear lower portion of the cabinet to form a space independent from the cultivating space and to receive a compressor and a condenser, a step part protruding inward of the cultivating space from a position corresponding to the machine compartment, and a water tank provided inside the cultivating space to store water to be supplied to the bed,

In addition, the water tank may be formed lower than the top surface of the step part.

In addition, the bed may cover the top surface of the step part and the top surface of the water tank.

In addition, the water tank may have a width corresponding to a width of the cultivating space, and a height corresponding to a distance from the floor of the cultivating space to a bottom surface of the bed.

In addition, the water tank may be provided inside the cultivating space to be withdrawn, and may cover a space between the floor of the cultivating space and the bed in a state that the water tank is inserted.

In addition, the water tank may be exposed when the door is open, and at least a portion of the water tank may be formed to be transparent such that an inner part of the water tank is viewed.

In addition, a pump and a valve may be interposed between a front surface of the step part and a rear surface of the water tank to supply water from the water tank to the bed.

In addition, the water tank may cover a space in which the pump and the valve are provided.

According another aspect, according to an embodiment of the present invention, an apparatus for cultivating plants, the apparatus may include a cabinet having a cultivating space, a plurality of beds to vertically partition the cultivating space into a plurality of spaces and to cultivate the plants, a light assembly provided above the beds to irradiate top surfaces of the beds with light, a machine compartment provided at a lower portion of the cabinet and independent from the cultivating space, in which a compressor and a condenser are provided in the machine compartment, a water tank provided in front of the machine compartment to supply water to the beds, an evaporator provided at an upper portion of the machine compartment and on an inner rear surface of the cultivating space, and a heater provided on an outer rear surface of the cultivating space.

In addition, the evaporator may be a roll-bond type evaporator.

In addition, the heater may be provided at a position corresponding to the evaporator.

In addition, the evaporator may be provided to overlap with the plurality of spaces defined by the plurality of beds.

In addition, a blower assembly may be provided in front of the evaporator to circulate internal air of the cultivating space.

In addition, the blower assembly may be interposed between the light assembly and the beds.

In addition, the blower assembly may cover a rear wall surface of the cultivating space, which is interposed between the light assembly and the beds.

In addition, an outlet of the blower assembly, which is to discharge air, may be adjacent to a bottom surface of the light assembly, and an inlet to introduce air into the blower assembly may be adjacent to the top surfaces of the beds.

## Claims

1. An apparatus for cultivating plants, the apparatus comprising:
a cabinet (10) having a cultivating space (11) thereinside;
a door (20) to open or close the cultivating space (11);
at least one bed (50) provided in the cultivating space (11) and used to cultivate the plants;
a light assembly (60) to irradiate the bed with light for photosynthesis;
a machine compartment (12) provided at a lower portion of the cabinet (10), separated from the cultivating space (11) and disposed to receive a compressor (32) and a condenser (33) which form a cooling cycle to control a temperature of the cultivating space (11);
a step part (147) protruding inward of the cultivating space (11) from a position corresponding to the machine compartment (12);
a water supply case (49) disposed in front of the step part (147); and
a water tank (40) to store water to be supplied to the at least one bed (50), wherein the water tank (40) is provided inside the cultivating space (11) spaced apart from the machine compartment (12) and in front of the water supply case (49),
wherein the water tank (40) is received inside a space defined by the door (20), the step part (147), the at least one bed (50), and a floor of the cultivating space (11),
**characterized in that** the apparatus further comprises:
tank rails (43) disposed at opposite sides of the water tank (40) and coupled to the water tank (40) to withdraw or introduce the water tank (40);
a suction pipe (412) provided inside the water tank (40) and extending to the inside of the water tank body (40) by passing through the rear surface of the water tank (41); and
a connection pipe (492) provided in the water supply case (49) and at a position corresponding to the suction pipe (412) and connected to a pump (494), and
wherein the suction pipe (412) and the connection pipe (492) are capable of selectively being connected to or disconnected from each other, and
when the water tank (40) is mounted, the suction pipe (412) is configured to be connected with the connection pipe (492).

2. The apparatus of claim 1, wherein the water tank (40) is provided in front of the machine compartment (12) in a front-rear direction of the apparatus, and exposed when the door (20) is open.

3. The apparatus of claim 1 or 2, wherein the machine compartment (12) has at least a portion communicating with an outside of the apparatus through a rear side of the apparatus.

4. The apparatus of any one of claims 1 to 3, further comprising:
the pump (494) and a valve (496) connected with the water tank (40) through a pipe to supply water to the at least one bed (50),
wherein the pump (494) and the valve are provided inside the cultivating space.

5. The apparatus of claim 4, wherein the pump (494) and the valve (496) are disposed between the machine compartment (12) and the water tank (40).

6. The apparatus of claim 4 or 5, wherein the pump (494) and the valve (496) are covered by the water tank (40).

7. The apparatus of any one of claims 1 to 6, wherein the water tank (40) is provided detachably from the cultivating space (11) when the door (20) is open.

8. The apparatus of any one of claims 1 to 7, wherein a top surface of the machine compartment (12) and a top surface of the water tank (40) are arranged to be located under the at least one bed (50).

9. The apparatus of any one of claims 1 to 8, wherein a front surface of the at least one bed (50) and a front surface of the water tank (40) are positioned on the same plane.

10. The apparatus of any one of claims 1 to 9, further comprising:
a duct (17) to allow the machine compartment (12) and the cultivating space (11) to communicate with each other such that air of the machine compartment (12) is introduced into the cultivating space (11) through the duct (17).

11. The apparatus of any one of claims 1 to 10, insofar as depending on claims 4 wherein the pump (494) and the valve (496) are disposed between a front surface of the step part (147) and a rear surface of the water tank (40) to supply water from the water tank (40) to the at least one bed (50),
wherein preferably the water tank (40) is disposed to cover a portion of a space, in which the pump (494) and the valve (496) are provided.

12. The apparatus of any one of claims 1 to 11, wherein the water tank (40) is disposed to cover a portion of a space between a floor of the cultivating space (11) and the at least one bed (50) when the water tank (40) is moved in to a mounting position thereof.

13. The apparatus of any one of claims 1 to 12, further comprising:
an evaporator (31) provided at an upper portion of the machine compartment (12) and on an inner rear surface of the cultivating space (11); and
a heater (102) provided on an outer rear surface of the cultivating space (11),
wherein preferably the at least one bed (50) is a plurality of beds and the evaporator (31) is provided to overlap with some of the plurality of beds along a vertical direction of the apparatus.

14. The apparatus of claim 13, further comprising:
a blower assembly (80) provided in front of the evaporator (31) to circulate internal air of the cultivating space (11),
wherein preferably the blower assembly (80) is disposed between the light assembly (60) and the plurality of beds.

## Patentansprüche

1. Vorrichtung zum Kultivieren von Pflanzen, wobei die Vorrichtung aufweist:
einen Schrank (10) mit einem darin befindlichen Kultivierungsraum (11);
eine Tür (20) zum Öffnen oder Schließen des Kultivierungsraums (11);
mindestens ein Bett (50), das in dem Kultivierungsraum (11) vorgesehen ist und zum Kultivieren der Pflanzen verwendet wird;
eine Lichtanordnung (60) zur Bestrahlung des Betts mit Licht zur Photosynthese;
ein Maschinenfach (12), der an einem unteren Abschnitt des Schranks (10) vorgesehen ist, vom Kultivierungsraum (11) getrennt ist und so angeordnet ist, einen Verdichter (32) und einen Kondensator (33) aufzunehmen, die einen Kühlkreislauf bilden, um eine Temperatur des Kultivierungsraums (11) zu steuern;
einen Stufenteil (147), der in den Kultivierungsraum (11) von einer dem Maschinenfach (12) entsprechenden Position vorsteht;
ein Wasserzufuhrgehäuse (49), das vor dem Stufenteil (147) angeordnet ist; und
einen Wassertank (40) zum Speichern von Wasser, das dem mindestens einen Bett (50) zugeführt werden soll, wobei der Wassertank (40) innerhalb des Kultivierungsraums (11) beabstandet von dem Maschinenfach (12) und vor dem Wasserzufuhrgehäuse (49) vorgesehen ist, wobei der Wassertank (40) innerhalb eines Raums aufgenommen ist, der durch die Tür (20), den Stufenteil (147), das mindestens eine Bett (50) und einen Boden des Kultivierungsraums (11) definiert ist,
**dadurch gekennzeichnet, dass** die Vorrichtung ferner aufweist:
Behälterschienen (43), die an gegenüberliegenden Seiten des Wassertanks (40) angeordnet und mit dem Wassertank (40) gekoppelt sind, um den Wassertank (40) zu entnehmen oder einzuführen;
ein Saugrohr (412), das im Inneren des Wassertanks (40) vorgesehen ist und sich in das Innere des Wassertankkörpers (40) erstreckt, indem es durch die hintere Oberfläche des Wassertanks (41) verläuft; und
ein Verbindungsrohr (492), das in dem Wasserzufuhrgehäuse (49) und an einer Position vorgesehen ist, die dem Saugrohr (412) entspricht, und das mit einer Pumpe (494) verbunden ist, und
wobei das Saugrohr (412) und das Verbindungsrohr (492) selektiv miteinander verbunden oder voneinander getrennt werden können, und
wenn der Wassertank (40) montiert wird, das Saugrohr (412) konfiguriert ist, mit dem Verbindungsrohr (492) verbunden zu werden.

2. Vorrichtung nach Anspruch 1, wobei der Wassertank (40) vor dem Maschinenfach (12) in einer Richtung von vorne nach hinten der Vorrichtung vorgesehen ist und freiliegt, wenn die Tür (20) geöffnet ist.

3. Vorrichtung nach Anspruch 1 oder 2, wobei das Maschinenfach (12) mindestens einen Abschnitt aufweist, der mit einer Außenseite der Vorrichtung durch eine Rückseite der Vorrichtung in Verbindung steht.

4. Vorrichtung nach einem der Ansprüche 1 bis 3, die ferner aufweist:
die Pumpe (494) und ein Ventil (496), die über ein Rohr mit dem Wassertank (40) verbunden sind, um dem mindestens einen Bett (50) Wasser zuzuführen,
wobei die Pumpe (494) und das Ventil innerhalb des Kultivierungsraums angeordnet sind.

5. Vorrichtung nach Anspruch 4, wobei die Pumpe (494) und das Ventil (496) zwischen dem Maschinenfach (12) und dem Wassertank (40) angeordnet sind.

6. Vorrichtung nach Anspruch 4 oder 5, wobei die Pumpe (494) und das Ventil (496) durch den Wassertank (40) abgedeckt sind.

7. Vorrichtung nach einem der Ansprüche 1 bis 6, wobei der Wassertank (40) vom Kultivierungsraum (11) abnehmbar vorgesehen ist, wenn die Tür (20) geöffnet ist.

8. Vorrichtung nach einem der Ansprüche 1 bis 7, wobei eine obere Fläche des Maschinenfachs (12) und eine obere Fläche des Wassertanks (40) so angeordnet sind, dass sie sich unter dem mindestens einen Bett (50) befinden.

9. Vorrichtung nach einem der Ansprüche 1 bis 8, wobei eine vordere Fläche des mindestens einen Betts (50) und eine vordere Fläche des Wassertanks (40) in derselben Ebene angeordnet sind.

10. Vorrichtung nach einem der Ansprüche 1 bis 9, die ferner aufweist:
einen Kanal (17), um es zu ermöglichen, dass das Maschinenfach (12) und der Kultivierungsraum (11) miteinander in Verbindung stehen, so dass Luft aus dem Maschinenfach (12) durch den Kanal (17) in den Kultivierungsraum (11) eingeleitet wird.

11. Vorrichtung nach einem der Ansprüche 1 bis 10, insofern als von Anspruch 4 abhängig, wobei die Pumpe (494) und das Ventil (496) zwischen einer vorderen Fläche des Stufenteils (147) und einer hinteren Fläche des Wassertanks (40) angeordnet sind, um Wasser aus dem Wassertank (40) dem mindestens einen Bett (50) zuzuführen, wobei der Wassertank (40) vorzugsweise so angeordnet ist, dass er einen Teil eines Raums abdeckt, in dem die Pumpe (494) und das Ventil (496) vorgesehen sind.

12. Vorrichtung nach einem der Ansprüche 1 bis 11, wobei
der Wassertank (40) so angeordnet ist, dass er einen Teil eines Raums zwischen einem Boden des Kultivierungsraums (11) und dem mindestens einen Bett (50) abdeckt, wenn der Wassertank (40) in eine Montageposition desselben bewegt wird.

13. Vorrichtung nach einem der Ansprüche 1 bis 12, die ferner aufweist:
einen Verdampfer (31), der an einem oberen Abschnitt des Maschinenfachs (12) und an einer inneren Rückseite des Kultivierungsraums (11) vorgesehen ist; und
eine Heizung (102), die an einer äußeren Rückseite des Kultivierungsraums (11) vorgesehen ist,
wobei vorzugsweise das mindestens eine Bett (50) aus mehreren Betten besteht und der Verdampfer (31) so vorgesehen ist, dass er sich mit einigen der mehreren Betten entlang einer vertikalen Richtung der Vorrichtung überlappt.

14. Vorrichtung nach Anspruch 13, die ferner aufweist:
eine Gebläseanordnung (80), die vor dem Verdampfer (31) vorgesehen ist, um die Innenluft des Kultivierungsraums (11) umzuwälzen, wobei die Gebläseanordnung (80) vorzugsweise zwischen der Lichtanordnung (60) und den mehreren Betten angeordnet ist.

## Revendications

1. Appareil pour cultiver des plantes comprenant:
une carrosserie (10) contenant un espace de culture (11) ;
une porte (20) pour ouvrir ou fermer l'espace de culture (11) ;
au moins un lit (50) prévu dans l'espace de culture (11) et utilisé pour cultiver des plantes;
un ensemble d'éclairage (60) pour éclairer le lit afin de permettre la photosynthèse ;
un compartiment machine (12) prévu dans une partie inférieure de la carrosserie (10), séparé de l'espace de culture (11) et disposé de manière à recevoir un compresseur (32) et un condenseur (33) formant un cycle de refroidissement pour contrôler la température de l'espace de culture (11) ;
une partie étagée (147) faisant saillie vers l'intérieur de l'espace de culture (11) depuis un emplacement correspondant au compartiment machine (12) ;
un boîtier d'alimentation en eau (49) disposé devant la partie étagée (147) ; et
un réservoir d'eau (40) pour stocker l'eau à fournir audit au moins un lit (50), ledit réservoir d'eau (40) étant prévu à l'intérieur de l'espace de culture (11), espacé du compartiment machine (12) et devant le boîtier d'alimentation en eau (49),
où le réservoir d'eau (40) est logé à l'intérieur d'un espace défini par la porte (20), la partie étagée (147), ledit au moins un lit (50) et un plancher de l'espace de culture (11), **caractérisé en ce que** ledit appareil comprend en outre :
des rails de réservoir (43) disposés sur des côtés opposés du réservoir d'eau (40) et raccordés au réservoir d'eau (40) pour retirer ou introduire le réservoir d'eau (40) ;
une conduite d'aspiration (412) prévue à l'intérieur du réservoir d'eau (40) et s'étendant vers l'intérieur du corps de réservoir d'eau (40) en traversant la surface arrière du réservoir d'eau (41) ; et
une conduite de connexion (492) prévue dans le boîtier d'alimentation en eau (49) à un emplacement correspondant à la conduite d'aspiration (412) et reliée à une pompe (494), et
où la conduite d'aspiration (412) et la conduite de connexion (492) peuvent être sélectivement reliées ou déconnectées l'une de l'autre, et où,
lorsque le réservoir d'eau (40) est monté, la conduite d'aspiration (412) est prévue pour être reliée à la conduite de connexion (492).

2. Appareil selon la revendication 1, où le réservoir d'eau (40) est disposé devant le compartiment machine (12) dans le sens antéropostérieur de l'appareil, et est exposé lorsque la porte (20) est ouverte.

3. Appareil selon la revendication 1 ou la revendication 2, où le compartiment machine (12) présente au moins une partie communiquant avec l'extérieur de l'appareil par un côté arrière de l'appareil.

4. Appareil selon l'une des revendications 1 à 3, comprenant en outre :
la pompe (494) et une vanne (496) reliées au réservoir d'eau (40) par une conduite pour alimenter en eau ledit au moins un lit (50),
la pompe (494) et la vanne étant prévues à l'intérieur de l'espace de culture.

5. Appareil selon la revendication 4, où la pompe (494) et la vanne (496) sont disposées entre le compartiment machine (12) et le réservoir d'eau (40).

6. Appareil selon la revendication 4 ou la revendication 5, où la pompe (494) et la vanne (496) sont recouvertes par le réservoir d'eau (40).

7. Appareil selon l'une des revendications 1 à 6, où le réservoir d'eau (40) est prévu détachable de l'espace de culture (11) lorsque la porte (20) est ouverte.

8. Appareil selon l'une des revendications 1 à 7, où une surface supérieure du compartiment machine (12) et une surface supérieure du réservoir d'eau (40) sont agencées de manière à être disposées sous ledit au moins un lit (50).

9. Appareil selon l'une des revendications 1 à 8, où une surface avant dudit au moins un lit (50) et une surface avant du réservoir d'eau (40) sont placées sur le même plan.

10. Appareil selon l'une des revendications 1 à 9, comprenant en outre :
un conduit (17) permettant au compartiment machine (12) et à l'espace de culture (11) de communiquer entre eux de sorte que l'air du compartiment machine (12) est introduit dans l'espace de culture (11) par ledit conduit (17).

11. Appareil selon l'une des revendications 1 à 10, si dépendante de la revendication 4, où la pompe (494) et la vanne (496) sont disposées entre une surface avant de la partie étagée (147) et une surface arrière du réservoir d'eau (40) pour refouler l'eau du réservoir d'eau (40) vers ledit au moins un lit (50),
le réservoir d'eau (40) étant de préférence disposé de manière à couvrir une partie d'un espace où la pompe (494) et la vanne (496) sont prévues.

12. Appareil selon l'une des revendications 1 à 11, où
le réservoir d'eau (40) est disposé de manière à couvrir une partie d'un espace entre un plancher de l'espace de culture (11) et ledit au moins un lit (50) lorsque le réservoir d'eau (40) est déplacé vers sa position de montage.

13. Appareil selon l'une des revendications 1 à 12, comprenant en outre :
un évaporateur (31) prévu dans une partie supérieure du compartiment machine (12) et sur une surface arrière intérieure de l'espace de culture (11) ; et
un dispositif de chauffage (102) prévu sur une surface arrière extérieure de l'espace de culture (11),
où ledit au moins un lit (50) est de préférence constitué d'une pluralité de lits et l'évaporateur (31) est prévu pour chevaucher quelques lits de la pluralité de lits dans la direction verticale de l'appareil.

14. Appareil selon la revendication 13, comprenant en outre :
un ensemble de soufflerie (80) prévu devant l'évaporateur (31) pour faire circuler l'air interne de l'espace de culture (11),
ledit ensemble de soufflerie (80) étant de préférence disposé entre l'ensemble d'éclairage (60) et la pluralité de lits.
